# EUROPEAN PATENT APPLICATION

(11) **EP 4 614 656 A1**
(43) Date of publication of application: **10.09.2025**
(21) Application number: 23885772.6
(22) Date of filing: 31.10.2023
(51) Int. Cl.: H01M 10/0585, H01M 4/13, H01M 10/0562, H01M 50/103, H01M 50/117, H01M 50/121, H01M 50/122, H01M 50/131, H01M 50/586, H01M 50/591

(54) **ALL-SOLID-STATE SECONDARY BATTERY AND METHOD FOR PRODUCING SAME**

(30) Priority: 31.10.2022 JP 2022174396
(71) Applicant: FUJIFILM Corporation, Tokyo 106-8620 (JP)
(72) Inventor: IMAI, Shinji, Ashigarakami-gun, Kanagawa 258-8577 (JP)
(74) Representative: HGF
(86) International application number: PCT/JP2023/039312
(87) International publication number: WO 2024/096018

(57) **Abstract**

Provided are an all-solid state secondary battery including a battery element member including one or more battery units each including at least a negative electrode active material layer, a solid electrolyte layer, and a positive electrode active material layer laminated in this order, in which an insulating coating body that coats at least a side surface of the battery element member is provided at an end part of the battery element member, and the insulating coating body consists of a mixture of a resin material that melts in a temperature range of 300°C or lower and insulating inorganic particles that do not melt at 350°C; as well as a manufacturing method of an all-solid state secondary battery including a step of disposing a mixture of a resin material that melts in a temperature range of 300°C or lower and insulating inorganic particles that do not melt at 350°C, at an end part of the battery element member, and a step of pressurizing the mixture against the battery element member in an inward direction while heating the mixture at a temperature at which the resin material melts.

## Description

### BACKGROUND OF THE INVENTION

### 1. Field of the Invention

The present invention relates to an all-solid state secondary battery and a manufacturing method of the same.

### 2. Description of the Related Art

The all-solid state secondary battery has a battery unit in which a negative electrode active material layer, a solid electrolyte layer, and a positive electrode active material layer are laminated in this order, as a battery element member. In addition to a normal (single layer type) all-solid state secondary battery having one set of the battery unit, development has also been underway in recent years for practical use of a laminated type all-solid state secondary battery in which two or more sets of the battery units are laminated for the purpose of achieving high energy density.

Since the all-solid state secondary battery is usually configured by sequentially laminating a positive electrode active material layer and a negative electrode active material layer with a solid electrolyte layer interposed therebetween, there is a problem in that end parts of a battery unit in which constituent layers such as the negative electrode active material layer, the solid electrolyte layer, and the positive electrode active material layer are laminated are likely to come into contact with each other. That is, even in a case where the positive electrode active material layer and the negative electrode active material layer are laminated with the solid electrolyte layer therebetween, the end parts of the positive electrode active material layer and the negative electrode active material layer are likely to come into contact with each other, which causes a short circuit.

An all-solid state secondary battery that addresses such a problem of short circuits occurring at end parts has been proposed.

For example, JP2019-175736A discloses an electrochemical element comprising "an electrode body for an electrochemical element having a positive electrode, a negative electrode, and a solid electrolyte layer interposed between the positive electrode and the negative electrode, in which the solid electrolyte layer contains a sulfide-based solid electrolyte, and an insulating layer containing a filler containing a resin having a melting point or a thermal decomposition temperature of 150°C or higher and a binder is formed on a side surface of the electrode body".

In addition, WO2016/152565A discloses "an all-solid state lithium battery comprising an alignment positive electrode plate that is composed of an alignment polycrystal body in which a plurality of lithium transition metal oxide particles are aligned, a solid electrolyte layer that is provided on the alignment positive electrode plate and is composed of a lithium ion conductive material, a negative electrode layer that is provided on the solid electrolyte layer, and an end part insulating part that insulating-coats an end part of the alignment positive electrode plate, in which a surface of the end part insulating part on a side of the solid electrolyte layer forms a single surface continuous with a surface of the alignment positive electrode plate on a side of the solid electrolyte layer, and thus there is no step between the end part insulating part and the surface of the alignment positive electrode plate on the side of the solid electrolyte layer, or the surface of the end part insulating part on the side of the solid electrolyte layer is a discontinuous surface lower than the surface of the alignment positive electrode plate on the side of the solid electrolyte layer, but a step between the end part insulating part and the surface of the alignment positive electrode plate on the side of the solid electrolyte layer is smaller than a thickness of the solid electrolyte layer".

### SUMMARY OF THE INVENTION

By the way, the constituent layer constituting the battery unit is formed by various methods, such as a film forming method using a constituent layer forming material containing solid particles such as an inorganic solid electrolyte, an active material, and a conductive auxiliary agent (a method of applying and drying a constituent layer forming material), and a method of sputtering or vapor-depositing an active material. In this case, regardless of the manufacturing method, the end part of the formed constituent layer is likely to have a small layer thickness and is prone to poor adhesion, which induces the occurrence of short circuits at the end parts of the battery element members (battery unit, constituent layer). In addition, in a case where an all-solid state secondary battery (battery unit) is pressurized in a lamination direction during manufacture and use in order to improve battery performance, there is a problem that the end part of the constituent layer is deformed due to the stress from the pressurization, and the adhesion of solid particles is broken down, causing defects (crack, breakage, chipping, and the like), which ultimately gives a rise to a short circuit. As described above, the all-solid state secondary battery has a problem in that a short circuit at an end part of the battery element member is likely to occur due to the end part forming properties of the constituent layer and pressurization, in addition to the short circuit caused by the lamination of the constituent layers (the contact of the constituent layers) described above. Such problems of short circuits at the end parts and deformation of the end parts or the occurrence of defects occur significantly in an all-solid state secondary battery including a solid electrolyte layer formed of a sulfide-based inorganic solid electrolyte which is soft and brittle, and in a laminated type all-solid state secondary battery in which a technique of making the dimensions (the surface area of the main surface) of the positive electrode active material layer smaller than that of the negative electrode active material layer in order to suppress the occurrence of short circuits due to the lamination misalignment of the constituent layers is frequently used.

However, the all-solid state secondary battery of JP2019-175736A is configured to prevent the occurrence of a short circuit that may occur in a case where constituent layers are simply laminated by providing an insulating layer on a side surface of an electrode body, and the all-solid state secondary battery of WO2016/152565A is configured to prevent a short circuit caused by a step that may occur in a case where an alignment positive electrode plate is used by providing an end part coating portion that insulating-coats an end part of the alignment positive electrode plate. Neither JP2019-175736A nor WO2016/152565A considers the end part forming properties of the constituent layer and the deformation of the end part or the occurrence of defects. In the first place, in the all-solid state secondary battery of WO2016/152565A in which the alignment positive electrode plate is used, there is no problem of deformation of the end part of the constituent layer or the occurrence of defects.

An object of the present invention is to provide an all-solid state secondary battery which is capable of suppressing the occurrence of a short circuit by preventing the occurrence of deformation and defects while maintaining the insulating properties of an end part of a battery element member, and a manufacturing method of the same.

As a result of extensive studies, the present inventors have found that, by providing, at an end part (at least a side surface) of a battery element member including a battery unit in which constituent layers are laminated, an insulating coating body that coats the end part of the battery element member from the outside with respect to the side surface, and by forming the insulating coating body from a mixture of a resin material that melts in a temperature range of 300°C or lower and insulating inorganic particles that do not melt at 350°C, it is possible to prevent the occurrence of deformation and defects while maintaining the end part insulating properties of the battery element member. The present invention has been completed as a result of further studies based on these findings.

That is, the above-mentioned object has been achieved by the following means.
<1> An all-solid state secondary battery comprising a battery element member,
   in which the battery element member includes one or more battery units each including at least a negative electrode active material layer, a solid electrolyte layer, and a positive electrode active material layer laminated in this order,
   an insulating coating body that coats at least a side surface of the battery element member from an outside with respect to the side surface is provided at an end part of the battery element member, and
   the insulating coating body consists of a mixture of a resin material that melts in a temperature range of 300°C or lower and insulating inorganic particles that do not melt at 350°C.
<2> The all-solid state secondary battery according to <1>, in which the battery unit is a battery unit in which a negative electrode collector, a negative electrode active material layer, a solid electrolyte layer, a positive electrode active material layer, and a positive electrode collector are laminated in this order, and
   the positive electrode collector has a positive electrode collecting portion that is laminated adjacent to the positive electrode active material layer and a positive electrode tab that is extended to protrude from one end of the positive electrode collecting portion, and the positive electrode tab protrudes from the insulating coating body.
<3> The all-solid state secondary battery according to <1> or <2>, in which the battery unit is a battery unit in which a negative electrode collector, a negative electrode active material layer, a solid electrolyte layer, a positive electrode active material layer, and a positive electrode collector are laminated in this order, and
   the negative electrode collector has a negative electrode collecting portion that is laminated adjacent to the negative electrode active material layer and a negative electrode tab that is extended to protrude from one end of the negative electrode collecting portion, and the negative electrode tab protrudes from the insulating coating body.
<4> The all-solid state secondary battery according to any one of <1> to <3>, in which the insulating coating body consists of a molten solidified body of a resin material that melts in a temperature range of 200°C or lower and insulating solid particles that do not melt at 250°C.
<5> The all-solid state secondary battery according to any one of <1> to <4>, in which a recess adjacent to an outer side of the positive electrode active material layer or the negative electrode active material layer in a plane direction, which is formed at the end part of the battery element member due to a dimensional difference between the positive electrode active material layer and the negative electrode active material layer, is filled with an insulating coating body containing the insulating inorganic particles.
<6> The all-solid state secondary battery according to any one of <1> to <5>, in which at least one interface between layers that are laminated adjacent to each other in the battery element member has a coating body intrusion region into which an insulating coating body containing at least one insulating inorganic particle intrudes from the end part of the battery element member toward an inside.
<7> The all-solid state secondary battery according to <6>, in which the solid electrolyte layer in contact with the coating body intrusion region has no crack.
<8> A manufacturing method of an all-solid state secondary battery, the method comprising: a step of disposing a mixture of a resin material that melts in a temperature range of 300°C or lower and insulating inorganic particles that do not melt at 350°C, at an end part of a battery element member including one or more laminated units each including at least a negative electrode active material layer, a solid electrolyte layer, and a positive electrode active material layer laminated in this order; and a step of pressurizing the mixture against the battery element member in an inward direction while heating the mixture at a temperature at which the resin material melts.
<9> The manufacturing method according to <8>, in which the pressurizing step is carried out in a state where the battery element member is pressurized in a lamination direction.
<10> The manufacturing method according to <8> or <9>, in which, in the pressurizing step, the mixture disposed at the end part of the battery element member is heated to the temperature to flow in the inward direction while preventing flow in a lamination direction.

The all-solid state secondary battery according to the embodiment of the present invention makes it possible to prevent the contact of the constituent layers at the end part of the battery element member and maintain the insulating properties of the end part while reinforcing the end part to prevent the occurrence of deformation and defects, thereby suppressing the occurrence of a short circuit. In addition, the manufacturing method of an all-solid state secondary battery according to the embodiment of the present invention makes it possible to manufacture an all-solid state secondary battery in which the above-mentioned occurrence of a short circuit is suppressed.

The above-mentioned and other features and advantages of the present invention will be further clarified from the following description with appropriate reference to the accompanying drawings.

### BRIEF DESCRIPTION OF THE DRAWINGS

Fig. 1 is a longitudinal cross-sectional view schematically showing a basic configuration of a general all-solid state secondary battery.
Fig. 2 is a partial schematic cross-sectional view schematically showing an end part in a preferred embodiment of an all-solid state secondary battery according to the present invention.
Fig. 3 is a partial schematic cross-sectional view schematically showing an end part in another preferred embodiment of the all-solid state secondary battery according to the present invention.
Fig. 4 is a partial schematic cross-sectional view schematically showing another end part in still another preferred embodiment of the all-solid state secondary battery according to the present invention.
Fig. 5 is a partial schematic cross-sectional view schematically showing still another end part in still yet another preferred embodiment of the all-solid state secondary battery according to the present invention.
Fig. 6A is a schematic top view showing one embodiment of a positive electrode plate that can be used in a preferred production method of a battery element member.
Fig. 6B is a schematic top view showing one embodiment of a negative electrode plate with an electrolyte layer that can be used in a preferred production method of a battery element member.
Fig. 7 is a schematic top view showing a state in which a plurality of electrode plates are accommodated in an accommodation space of a frame and temporarily positioned in a preferred production method of a battery element member using a preferred manufacturing device.
Fig. 8A is a schematic cross-sectional view illustrating an initial state of a main positioning step in a preferred production method of a battery element member using a preferred manufacturing device, and shows a cross section taken along a plane perpendicular to a longitudinal direction of a frame and passing through a center of a pin receiving portion.
Fig. 8B is a schematic cross-sectional view illustrating a completed state of a main positioning step in a preferred production method of a battery element member using a preferred manufacturing device, and shows a cross section taken along a plane perpendicular to a longitudinal direction of a frame and passing through a center of a pin receiving portion.
Fig. 9 is a schematic cross-sectional view showing a state in which the battery element member subjected to main positioning is pressurized and restrained in a lamination direction in a preferred manufacturing method of a laminated type all-solid state secondary battery using a preferred manufacturing device, and shows a cross section taken along a plane perpendicular to a longitudinal direction of a frame and passing through a center of a pin receiving portion.
Fig. 10 is a schematic cross-sectional view showing a state in which the battery element member subjected to main positioning is pressurized and restrained in a lamination direction in a preferred manufacturing method of a laminated type all-solid state secondary battery using a preferred manufacturing device, and shows a cut surface perpendicular to a longitudinal direction of a frame and approximately at a center in the longitudinal direction.
Fig. 11 is a schematic cross-sectional view illustrating a method of forming an insulating coating body on an end part of a battery element member by disposing a rod-shaped molded body in the vicinity of the end part of the battery element member and pressurizing the rod-shaped molded body in a preferred manufacturing method of a laminated type all-solid state secondary battery using a preferred manufacturing device.

### DESCRIPTION OF THE PREFERRED EMBODIMENTS

In the present invention, the term "main surface" refers to a surface perpendicular to a thickness direction in a flat plate body such as a constituent layer, and usually refers to a surface having the largest surface area. In addition, the term "plane direction" refers to an in-plane direction of the main surface, specifically, a machine direction and a lateral direction.

In the present invention, the term "insulating" refers to having electron-insulating properties, that is, the properties of not allowing electrons to pass through. In addition, in the present invention, in a case of referring to "insulating", "insulating properties", or "electron-insulating properties", it is preferable that the electrical conductivity is 10⁻⁹ S (Siemens)/cm or less at a measurement temperature of 25°C.

In the present invention, the "crack", "breakage", and "chipping" that may occur in the constituent layer are all defects resulting from the breakdown of the adhesion of solid particles. Specifically, the "crack" refers to a cleavage that extends continuously along the grain boundary of at least one solid particle in the depth direction or plane direction of the constituent layer, and in a case of being observed, for example, with an electron microscope or the like, the "crack" is recognized as a cleavage that has progressed along the grain boundary of at least one solid particle. Usually, once a cleavage is generated, stress is concentrated at the tip of the cleavage, so the cleavage linearly extends and does not follow the grain boundaries of the solid particles. On the other hand, the "breakage" means a state in which a crack penetrates in a depth direction and a plane direction, causing a constituent layer to lose its integrity (separated into a plurality of pieces), and the "chipping" means a state in which a part of a constituent layer is partially peeled off or missing (defective) (excluding a breakage state).

In the present invention, in a case where a numerical range is shown to describe a content, physical properties, or the like of a component, any upper limit value and any lower limit value can be appropriately combined to obtain a specific numerical range in a case where an upper limit value and a lower limit value of the numerical range are described separately. On the other hand, in a case where a plurality of numerical ranges represented by using "to" are set to make a description, the upper limit value and the lower limit value, which form each of the numerical ranges, are not limited to a specific combination described before and after "to" as a specific numerical range and can be set to a numerical range obtained by appropriately combining the upper limit value and the lower limit value of each numerical range. In the present invention, any numerical range indicated by using "to" means a range including the numerical values described before and after "to" as the lower limit value and the upper limit value, respectively.

Hereinafter, preferred aspects of the all-solid state secondary battery and the manufacturing method of the same according to the embodiment of the present invention will be specifically described, but the present invention is not limited to the preferred aspects described below.

### [All-solid state secondary battery]

In the all-solid state secondary battery according to the embodiment of the present invention, an end part of a battery element member is coated with an insulating coating body, and the insulating coating body can maintain the insulating properties of the end part of the battery element member (battery unit, constituent layer) and reinforce the strength of the end part of the constituent layer to prevent the occurrence of deformation and defects, and as a result, the occurrence of a short circuit can be suppressed. In particular, even in a case of an all-solid state secondary battery comprising a battery element member in which a composite material layer that requires pressurization for densification or restraint during use is adopted as a constituent layer, by integrally coating the end parts of the battery element member, the insulating properties of the end parts can be maintained and the strength of the composite material layer can be reinforced. As described above, the all-solid state secondary battery according to the embodiment of the present invention has high reliability regardless of whether the all-solid state secondary battery is a single layer type or a laminated type.

In the present invention, the end part of a battery element member refers to a region including at least a side surface (edge surface) of the battery element member, and in a case where there is a dimensional difference between the positive electrode active material layer and the negative electrode active material layer, it refers to a region including a recess formed by this dimensional difference (in other words, a region formed by a straight line connecting the outer side surface of the battery element member and a straight line connecting the inner surface of the recess).

In a case where the solid electrolyte layer is transferred or laminating-applied to cover the end part (side surface) of the negative electrode active material layer, the insulating coating body does not come into direct contact with the end part (side surface) of the negative electrode active material layer, but this form is also included in the present invention as one form of the end part of the battery element member. In this form, a compression pressure toward the battery element member in an inward direction is transmitted to the end part (side surface) of the negative electrode active material layer through the solid electrolyte layer.

The all-solid state secondary battery according to the embodiment of the present invention is the same as a known all-solid state secondary battery, except that the end part of the battery element member is coated with an insulating coating body, and other configurations are not particularly limited.

The all-solid state secondary battery according to the embodiment of the present invention includes both forms of an all-solid state secondary battery having one battery unit (laminated unit) in which at least a negative electrode active material layer, a solid electrolyte layer, and a positive electrode active material layer are laminated in this order (sometimes referred to as a single layer type all-solid state secondary battery) and an all-solid state secondary battery having two or more battery units (sometimes referred to as a laminated type all-solid state secondary battery). The number of battery units in the laminated type all-solid state secondary battery is not particularly limited as long as it is two or more, and can be set to, for example, 2 to 500 and is preferably 60 to 100.

The shape of the all-solid state secondary battery according to the embodiment of the present invention is not particularly limited and can be appropriately set depending on the use application and the like. For example, the shape of the all-solid state secondary battery can be circular or rectangular in a plan view. In the present invention, the term "rectangular" means a quadrangular shape including a square and a rectangle, but is not limited to a geometrically accurate quadrangular shape, and the all-solid state secondary battery may have a roughly quadrangular shape depending on the use application, required characteristics, and the like, and may also have a shape in which corners are chamfered. The external dimensions of the all-solid state secondary battery can be appropriately set depending on the use application and the like.

### <Configuration of all-solid state secondary battery>

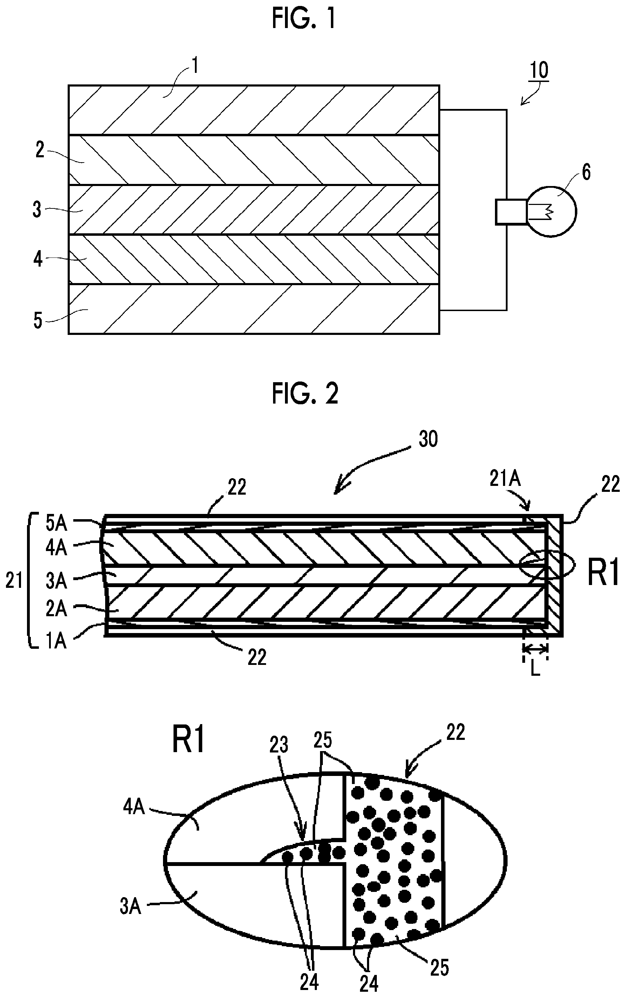

Fig. 1 shows a basic configuration (battery unit) of a typical all-solid state secondary battery.

As shown in Fig. 1, the all-solid state secondary battery 10 has a configuration in which a negative electrode collector 1, a negative electrode active material layer 2, a solid electrolyte layer 3, a positive electrode active material layer 4, and a positive electrode collector 5 are laminated in this order, as viewed from the negative electrode side. Adjacent layers in the layers are in direct contact with each other.

With the above-mentioned configuration, during charging, electrons (e⁻) are supplied to the negative electrode side, and at the same time, an alkali metal or alkaline earth metal constituting a positive electrode active material is ionized. The ionized ions move through (are conducted through) the solid electrolyte layer 3 and are accumulated in the negative electrode. For example, in a lithium ion secondary battery, lithium ions (Li⁺) are accumulated in the negative electrode.

During discharging, the alkali metal ions or alkaline earth metal ions accumulated in the negative electrode are returned to the positive electrode side, and thus electrons are supplied to an operation portion 6. In the illustrated example, a light bulb is used as the operation portion 6, which is turned on by discharge.

The single layer type all-solid state secondary battery according to the embodiment of the present invention includes one battery unit in which a negative electrode active material layer, a solid electrolyte layer, and a positive electrode active material layer are laminated in this order as a battery element member, and preferably includes a basic configuration shown in Fig. 1 in which a negative electrode collector and a positive electrode collector are further laminated in addition to a negative electrode active material layer, a solid electrolyte layer, and a positive electrode active material layer.

Fig. 2 schematically shows the entirety of the end part of the all-solid state secondary battery and the vicinity of the interface between the solid electrolyte layer and the positive electrode active material layer (the region indicated by R1 in Fig. 2) in a cross section of a preferred embodiment of the all-solid state secondary battery (single layer type) according to the embodiment of the present invention, taken along the lamination direction.

The all-solid state secondary battery 30 is a single layer type all-solid state secondary battery 30 having a battery element member 21 consisting of one battery unit having the layer configuration shown in Fig. 1 as a basic unit. That is, the all-solid state secondary battery 30 has a battery element member 21 consisting of one battery unit 21 in which a negative electrode collector 1A, a negative electrode active material layer 2A, a solid electrolyte layer 3A, a positive electrode active material layer 4A, and a positive electrode collector 5A are laminated in this order, as viewed from the negative electrode side. In the all-solid state secondary battery 30, the main surfaces of the negative electrode collector 1A, the negative electrode active material layer 2A, the solid electrolyte layer 3A, the positive electrode active material layer 4A, and the positive electrode collector 5A all have the same surface area.

The battery element member 21 has, at an end part 21A thereof, an insulating coating body 22 that coats at least a side surface of the battery element member 21 from the outside with respect to the side surface. As shown in Fig. 2, the insulating coating body 22 integrally and entirely coats and seals the peripheral side surface of the battery element member 21 without any gaps. The insulating coating body 22 preferably coats the side surface of the end part 21A from the outside toward the inside in a compressed state. The insulating coating body 22 is disposed on the outside in contact with the side surface of the battery element member 21, and coats the main surfaces in the vicinity of the edges of the negative electrode collector 1A and the positive electrode collector 5A as well as the side surface of the battery element member 21. The amount of the insulating coating body 22 coating the main surface in the vicinity of the edge (the length (average coating thickness) L of the insulating coating body 22 in a plane direction on the main surface in the vicinity of the edge) is not particularly limited, and can be set to, for example, 0.1 mm or more and is preferably 0.5 to 2 mm.

As described above, in a case where the insulating coating body 22 is provided on the end part 21A of the battery element member 21, it is possible to maintain the insulating properties of the end part 21A of the battery element member 21 (battery unit, constituent layer) while preventing the occurrence of deformation and defects (collapse and destruction). As a result, the all-solid state secondary battery 30 makes it possible to suppress the occurrence of a short circuit and exhibits high reliability.

In the all-solid state secondary battery, as in a region R1 (diagonal lines are omitted for easy visual recognition) shown in an enlarged manner in Fig. 2, an interface between the solid electrolyte layer 3A and the positive electrode active material layer 4A that are laminated adjacent to each other has a coating body intrusion region 23 which is formed by the intrusion of the insulating coating body 22 containing at least one insulating inorganic particle 24 into the interface, from the end part 21A (side surface) of the battery element member 21 toward the inside (inside of the main surface). In addition, the coating body intrusion region 23 has at least one insulating inorganic particle 24 in a resin material 25 described later in the intrusion region into the interface. By having such a coating body intrusion region 23, even in a case where the layer thicknesses of the end parts of the positive electrode active material layer 4A and the solid electrolyte layer 3A are thin, the strength thereof can be reinforced to be firm, and the deformation of the end part 21A of the battery element member 21 and the occurrence of defects in the constituent layer, particularly the solid electrolyte layer 3A can be highly suppressed. Normally, defects are likely to occur at the end part of the solid electrolyte layer 3A, but the solid electrolyte layer 3A in contact with the coating body intrusion region 23 is prevented from developing defects such as crack, breakage, and chipping, and can be maintained in a defect-free state.

The number of insulating inorganic particles 24 contained in the coating body intrusion region 23 is not particularly limited as long as it is one or more, and is set appropriately and not unambiguously depending on the size of the insulating inorganic particles 24, the intrusion amount of the coating body intrusion region 23, and the like. For example, the number of insulating inorganic particles 24 present in the coating body intrusion region 23 is preferably a plurality of insulating inorganic particles 24, and can be set to, for example, 10 or more. The upper limit thereof is not particularly limited and is practically 50 or less.

The coating body intrusion region 23 only needs to be present at the interface, and the intrusion amount thereof (intrusion length from the side surface of the positive electrode active material layer 4A toward the inner direction: depth), the average thickness in a lamination direction, and the like can be appropriately determined. For example, the intrusion amount depends on the size of the positive electrode active material layer 4A, and can be set to, for example, 0.05 mm or more and is preferably 0.1 to 0.5 mm. The average thickness of the coating body intrusion region 23 depends on the layer thicknesses of the solid electrolyte layer 3A and the positive electrode active material layer 4A and can be set to, for example, 200 µm or less and is preferably 20 to 60 µm.

The presence, the intrusion amount, and the thickness of the coating body intrusion region 23, as well as the presence and the number of insulating inorganic particles can be confirmed or measured, for example, by observation with a scanning electron microscope (SEM).

Although not shown in Fig. 2, the positive electrode collector 5A has a positive electrode tab that is electrically connected thereto, and the negative electrode collector 1A has a negative electrode tab that is electrically connected thereto.

In a case where the end part of the single layer type all-solid state secondary battery 30 on which the positive electrode tab or the negative electrode tab is disposed is coated with an insulating coating body, each end part is the same as the above-mentioned end part 21A, except that the positive electrode tab or the negative electrode tab penetrates through the insulating coating body and protrudes outward from the outer surface of the insulating coating body. In this case, it can also be said that a part of the positive electrode tab or the negative electrode tab on the positive electrode collecting portion side or the negative electrode collecting portion side is coated with or embedded in an insulating coating body. The method of forming the end part is basically the same as that for the end part 21, and a method of forming an end part in which a positive electrode tab or a negative electrode tab in a laminated type all-solid state secondary battery described later is disposed can also be applied. The end part of the single layer type all-solid state secondary battery 30 can be formed, for example, by a method in which a mixture is disposed to sandwich the positive electrode tab or the negative electrode tab from above and below in a lamination direction and the mixture is pressurized against the battery element member in an inward direction.

The laminated type all-solid state secondary battery according to the embodiment of the present invention includes two or more battery units each including a negative electrode active material layer, a solid electrolyte layer, and a positive electrode active material layer laminated in this order as a battery element member, and preferably includes a basic configuration shown in Fig. 1 in which each battery unit further includes a negative electrode collector and a positive electrode collector laminated in addition to a negative electrode active material layer, a solid electrolyte layer, and a positive electrode active material layer. In this form, the adjacent battery units share a negative electrode collector or a positive electrode collector.

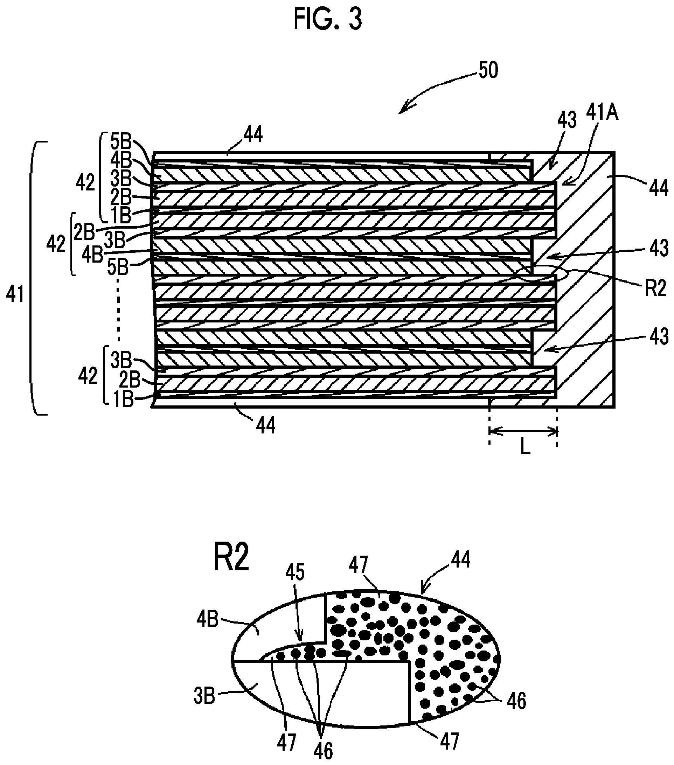

Fig. 3 shows a schematic view of a cross section along the lamination direction in a preferred embodiment of the all-solid state secondary battery (laminated type) according to the embodiment of the present invention, illustrating the entire end part (the end part on which the positive electrode tab and the negative electrode tab are not disposed) and the vicinity of the interface between the solid electrolyte layer and the positive electrode active material layer (the region indicated by R2 in Fig. 3).

The all-solid state secondary battery 50 is formed by alternately laminating a plurality of positive electrode active material layers 4B and a plurality of negative electrode active material layers 2B with solid electrolyte layers 3B interposed therebetween, and has a battery element member 41 consisting of five battery units 42 each having the layer configuration shown in Fig. 1 as a basic unit. That is, as shown in Fig. 3, the all-solid state secondary battery 50 has the battery element member 41 in which five battery units 42 each including a negative electrode collector 1B, the negative electrode active material layer 2B, the solid electrolyte layer 3B, the positive electrode active material layer 4B, and a positive electrode collector 5B laminated in this order, as viewed from the negative electrode side, are laminated in such a way that the laminating order of the constituent layers is alternately reversed. In this regard, two adjacent battery units 42 share one collector. That is, the all-solid state secondary battery 50 has a configuration in which negative electrode active material layers 2B are provided on both main surfaces of one negative electrode collector 1B, and positive electrode active material layers 4B are provided on both main surfaces of one positive electrode collector 5B. As shown in Fig. 3, the laminating order of the constituent layers in the laminated type all-solid state secondary battery 50 is a laminating order of positive electrode collector 5B-positive electrode active material layer 4B-solid electrolyte layer 3B-negative electrode active material layer 2B-negative electrode collector 1B-negative electrode active material layer 2B-solid electrolyte layer 3B-positive electrode active material layer 4B-....

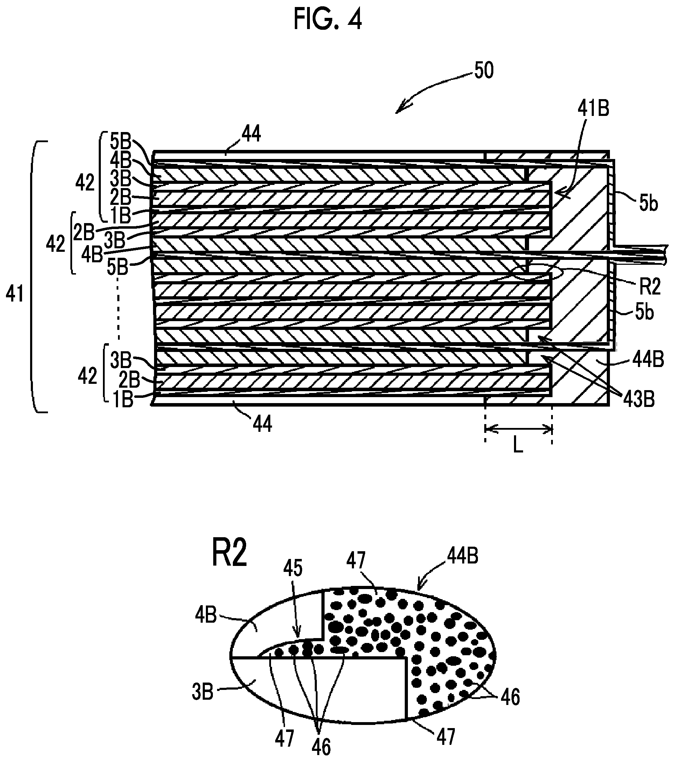

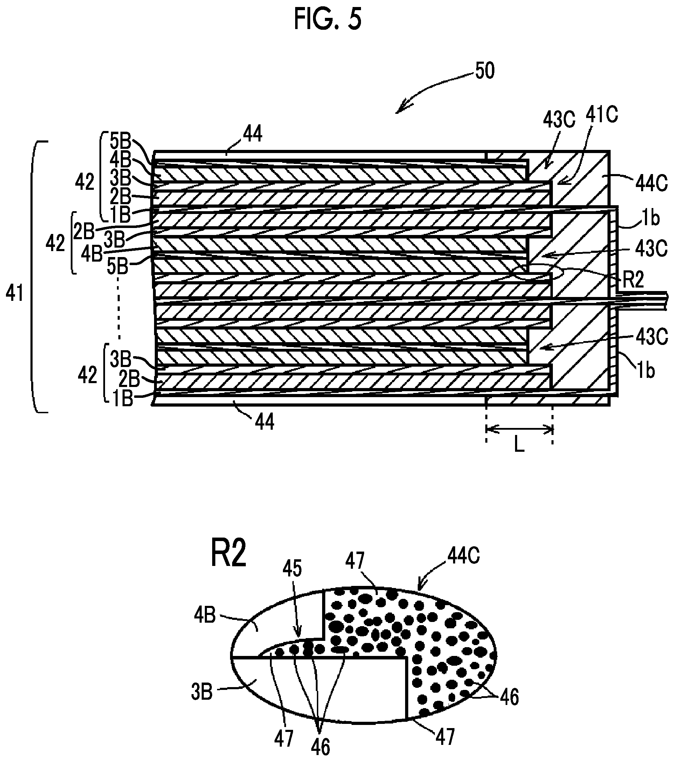

Although not clearly shown in Fig. 3, as is clear from Fig. 4 and Fig. 5, the collector of the all-solid state secondary battery 50 has a collecting portion that is laminated adjacent to the active material layer and a tab that is consecutively installed to protrude from one end of the collecting portion, as will be described later. In addition, in the battery element member 41, the positive electrode collector is laminated such that the positive electrode tab is positioned on the same end part side, and the negative electrode collector is laminated such that the negative electrode tab is positioned on an end part different from the end part where the positive electrode tab is positioned, typically on the opposite end part side.

As shown in Fig. 3, in the laminated type all-solid state secondary battery 50, the surface area of the main surface of the positive electrode active material layer 4B is set to be smaller than that of the negative electrode active material layer 2B. In general, in the laminated type all-solid state secondary battery, the surface area of the main surface of the positive electrode active material layer is set to be smaller than that of the negative electrode active material layer in order to prevent a short circuit due to lamination misalignment. In the laminated type all-solid state secondary battery 50, the positive electrode collector 5B and the positive electrode active material layer 4B have the same edge surface by punching or the like of a coated sheet at a side (end part) of the positive electrode in which the positive electrode tab is not provided, and the negative electrode collector 1B and the negative electrode active material layer 2B have the same edge surface by punching or the like of a coated sheet at a side (end part) of the negative electrode in which the negative electrode tab is not provided. The solid electrolyte layer 3B is transferred onto the negative electrode active material, so the solid electrolyte layer 3B has the same edge surface as the negative electrode collector 1B and the negative electrode active material layer 2B. Therefore, due to the dimensional difference between the positive electrode active material layer 4B and the negative electrode active material layer 2B, a recess 43 adjacent to the outer side of the positive electrode active material layer 4B in a plane direction is formed at an end part 41A (an end part where the positive electrode tab and the negative electrode tab are not disposed) of the battery element member 41. More specifically, as shown in Fig. 3, at the end part 41A of the battery element member 41, the recess 43 is formed adjacent to the outer side of the positive electrode active material layer 4B in a plane direction, by a side surface of a positive electrode plate (two positive electrode active material layers 4B and positive electrode collectors 5B) and two solid electrolyte layers 3B that sandwich the positive electrode plate. In a typical laminated type all-solid state secondary battery having such a recess, a short circuit is extremely likely to occur at an end part of a battery element member, and deformation and defects are also likely to occur. However, in the present invention, the laminated type all-solid state secondary battery 50 has an insulating coating body 44, so the occurrence of a short circuit at the end part 41A of the battery element member 41 and the occurrence of deformation or the like can be highly suppressed, and as a result, the positive electrode active material layer 4B can be set to be smaller than the negative electrode active material layer 2B, and not only the occurrence of a short circuit due to the insufficient reliability of the end part 41A but also the occurrence of a short circuit due to lamination misalignment can be highly suppressed.

The battery element member 41 has, at the end part 41A of the battery element member 41, an insulating coating body 44 that coats at least a side surface of the battery element member 41 from the outside with respect to the side surface. As shown in Fig. 3, the insulating coating body 44 integrally and entirely coats and seals the peripheral side surface of the battery element member 41 (five battery units 42) without any gaps. The insulating coating body 44 preferably coats the side surface of each end part from the outside toward the inside in a compressed state. The insulating coating body 44 is disposed in a region that is in contact with a side surface of each constituent layer from the outside with respect to the side surface of the constituent layer positioned outermost in a plane direction. In addition, the insulating coating body 44 also fills the recess 43, which is formed by the dimensional difference between the positive electrode active material layer 4B and the negative electrode active material layer 2B, with the insulating coating body 44 containing insulating inorganic particles 46 without any gaps. Furthermore, the insulating coating body 44 also coats the main surfaces in the vicinity of the edges of the negative electrode collector 1B which is outermost in a lamination direction (the lowermost layer in Fig. 3) and the positive electrode collector 5B which is outermost in a lamination direction (the uppermost layer in Fig. 3). The amount of the insulating coating body 44 coating the main surface in the vicinity of the edge (the length (average coating thickness) L of the insulating coating body in a plane direction on the main surface in the vicinity of the edge) is not particularly limited, and can be set to, for example, 0.1 mm or more and is preferably 0.5 to 2 mm. Here, the length L of the insulating coating body in a plane direction in the laminated type all-solid state secondary battery refers to an average length from the side surface of the constituent layer positioned outermost in a plane direction, that is, the negative electrode active material layer 2B and the solid electrolyte layer 3B in the battery element member 41, to the outer surface in a plane direction, as shown in Fig. 3.

As described above, in a case where the insulating coating body 44 is provided on the end part 41A of the battery element member 41, even in a case of the laminated type all-solid state secondary battery 50 in which the positive electrode active material layer 4B is set to be small, it is possible to maintain the insulating properties of the end part 41A of the battery element member 41 (battery unit 42, constituent layer) while preventing the occurrence of deformation and defects (collapse and destruction). As a result, the all-solid state secondary battery 50 makes it possible to suppress the occurrence of a short circuit and exhibits high reliability.

In the all-solid state secondary battery, as shown in a region R2 (diagonal lines are omitted for easy visual recognition) shown in an enlarged manner in Fig. 3, at least one interface between the solid electrolyte layer 3B and the positive electrode active material layer 4B that are laminated adjacent to each other has a coating body intrusion region 45 which is formed by the intrusion of the insulating coating body 44 containing at least one insulating inorganic particle 46 into the interface, from the end part 41A of the battery element member 41 toward the inside (inside of the main surface). The interface having the coating body intrusion region 45 is present within the recess 43. In addition, the coating body intrusion region 45 has at least one insulating inorganic particle 46 in a resin material 47 described later in the intrusion region into the interface. By having such a coating body intrusion region 45, even in a case where the layer thicknesses of the end parts of the positive electrode active material layer 4B and the solid electrolyte layer 3B are thin, the strength thereof can be reinforced to be firm, and the deformation of the end part 41A of the battery element member 41 and the occurrence of defects in the constituent layer, particularly the solid electrolyte layer 3B can be highly suppressed. Normally, defects are likely to occur at the end part of the solid electrolyte layer 3B, but the solid electrolyte layer 3B in contact with the coating body intrusion region 45 is prevented from developing defects such as crack, breakage, and chipping, and can be maintained in a defect-free state.

Although not shown in Fig. 3, in the all-solid state secondary battery 50, the coating body intrusion region 45 is present at all the interfaces between the solid electrolyte layer 3B and the positive electrode active material layer 4B that are laminated adjacent to each other, but may not be present at all the interfaces as will be described later.

The number of insulating inorganic particles 46 contained in the coating body intrusion region 45 is not particularly limited as long as it is one or more, and is set appropriately and not unambiguously depending on the size of the insulating inorganic particles 46, the intrusion amount of the coating body intrusion region 45, and the like. For example, the number of insulating inorganic particles 46 present in the coating body intrusion region 45 is preferably a plurality of insulating inorganic particles 46, and can be set to, for example, 10 or more. The upper limit thereof is not particularly limited and is practically 50 or less.

The intrusion amount of the coating body intrusion region 45 (intrusion length from the side surface of the positive electrode active material layer 4B toward the inner direction: depth), the average thickness in a lamination direction, and the like can be appropriately determined. For example, the intrusion amount depends on the size of the positive electrode active material layer 4B, and can be set to, for example, 0.01 mm or more and is preferably 0.02 to 0.1 mm. The average thickness of the coating body intrusion region 45 depends on the layer thicknesses of the solid electrolyte layer 3B and the positive electrode active material layer 4B and can be set to, for example, 200 µm or less and is preferably 20 to 60 µm.

The presence, the intrusion amount, and the thickness of the coating body intrusion region 45, as well as the presence and the number of insulating inorganic particles can be confirmed or measured as described above.

The laminated type all-solid state secondary battery 50 has positive electrode tabs to which each positive electrode collector 5B is electrically connected, and the positive electrode tabs are electrically connected to each other outside the laminated type all-solid state secondary battery 50. In addition, the laminated type all-solid state secondary battery 50 has negative electrode tabs to which each negative electrode collector 1B is electrically connected, and the negative electrode tabs are electrically connected to each other outside the laminated type all-solid state secondary battery 50. Therefore, although not shown in Fig. 3, the laminated type all-solid state secondary battery 50 has a rectangular shape in a plan view having four end parts including two end parts 41A on which the positive electrode tab and the negative electrode tab are not disposed, an end part 41B on which the positive electrode tab is disposed, and an end part 41C on which the negative electrode tab is disposed.

In a case where the end part of the laminated type all-solid state secondary battery 50 on which the positive electrode tab or the negative electrode tab is disposed is coated with an insulating coating body, each end part 41B or 41C is the same as the above-mentioned end part 41A, except that, as shown in Fig. 4 or Fig. 5, a plurality of positive electrode tabs or a plurality of negative electrode tabs penetrate through an insulating coating body 44B or 44C and protrude outward from the outer surface of the insulating coating body. In this case, it can also be said that a part of the positive electrode tab or the negative electrode tab on the positive electrode collecting portion side or the negative electrode collecting portion side is coated with or embedded in the insulating coating body 44B or 44C.

Fig. 4 is a partial schematic cross-sectional view schematically showing the end part 41B on which a positive electrode tab 5b is disposed, with respect to a cross section along a lamination direction in a preferred embodiment (laminated type all-solid state secondary battery 50) of the all-solid state secondary battery (laminated type) according to the embodiment of the present invention, and Fig. 5 is a partial schematic cross-sectional view schematically showing the end part 41C on which a negative electrode tab 1b is disposed, with respect to a cross section along a lamination direction in a preferred embodiment (laminated type all-solid state secondary battery 50) of the all-solid state secondary battery (laminated type) according to the embodiment of the present invention.

As shown in Fig. 4, the laminated type all-solid state secondary battery 50 comprises the battery element member 41 including one or more battery units 42 each including at least the negative electrode collector 1B, the negative electrode active material layer 2B, the solid electrolyte layer 3B, the positive electrode active material layer 4B, and the positive electrode collector 5B laminated in this order. Here, as will be described later, the positive electrode collector 5B has a positive electrode collecting portion 5a that is laminated adjacent to the positive electrode active material layer 4B and a positive electrode tab (positive electrode terminal) 5b that is consecutively installed to protrude from one end of the positive electrode collecting portion 5a. In addition, in the battery element member 41, the positive electrode collector 5B is laminated such that the positive electrode tab 5b is positioned on the same end part side, and the negative electrode collector 1B is laminated such that the negative electrode tab 1b is positioned on an end part different from the end part where the positive electrode tab 5b is positioned, typically on the opposite end part side.

The laminated type all-solid state secondary battery 50 has, at the end part 41B of the battery element member 41 where the positive electrode tab 5b is disposed, the insulating coating body 44B that coats at least a side surface of the battery element member 41 from the outside with respect to the side surface, and the positive electrode tab 5b penetrates through the insulating coating body 44B and protrudes outward from the outer surface of the insulating coating body 44B. The insulating coating body 44B is formed of a mixture which will be described later. As described above, in a case where the end part 41B has the insulating coating body 44B, even in a case where the positive electrode tab 5b is provided, it is possible to maintain the insulating properties of the end part 41B while preventing the occurrence of deformation and defects (collapse and destruction). As a result, the all-solid state secondary battery 50 makes it possible to suppress the occurrence of a short circuit and exhibits high reliability.

As shown in Fig. 4, a recess 43B adjacent to the outer side of the positive electrode active material layer 4B in a plane direction is formed at the end part 41B of the battery element member 41 where the positive electrode tab 5b is disposed. More specifically, at the end part 41B of the battery element member 41, the recess 43B is formed adjacent to the outer side of the positive electrode active material layer 4B in a plane direction, by the positive electrode tab 5b, the side surface of the positive electrode active material layer 4B, and the solid electrolyte layer 3B. In other words, the end part 41B has the recess 43B obtained by dividing the recess 43 of the end part 41A into two parts with the positive electrode tab 5b. Like the end part 41A, the end part 41B also has the insulating coating body 44B in the recess 43B, so that the occurrence of a short circuit due to the contact between the positive electrode tab 5b and each end part of the negative electrode collector 1B or the negative electrode active material layer 2B, or the like can be highly suppressed.

As shown in Fig. 4, a plurality of positive electrode tabs 5b protrude and are led out to the outside of the laminated type all-solid state secondary battery 50, that is, the outside of an insulating coating body 41B. In this case, the plurality of positive electrode tabs 5b may be in contact with each other inside the insulating coating body 41B as long as the positive electrode tabs 5b are not in contact with the negative electrode collector 1B and the negative electrode active material layer 2B in the all-solid state secondary battery 50, but it is preferable that the positive electrode tabs 5b are not in contact with each other. The protruding portions of the positive electrode tabs 5b are not coated with the insulating coating body 41B, and are disposed, for example, along the surface of the insulating coating body 44B and are electrically connected to each other by welding or the like to be integrated. Here, the amount of the insulating coating body 44B coating the positive electrode tab 5b (the length of the positive electrode tab 5b embedded in the insulating coating body 44B in a plane direction from the connecting portion with the positive electrode collecting portion 5a) is not particularly limited, and can be set to, for example, 0.1 mm or more and is preferably 0.5 to 2 mm.

As shown in Fig. 5, the laminated type all-solid state secondary battery 50 comprises the battery element member 42 shown in Fig. 4. Here, as will be described later, the negative electrode collector 1B has a negative electrode collecting portion 1a that is laminated adjacent to the negative electrode active material layer 2B and a negative electrode tab (negative electrode terminal) 1b that is consecutively installed to protrude from one end of the negative electrode collecting portion 1a. In addition, in the battery element member 41, the negative electrode collector 1B is laminated such that the negative electrode tab 1b is positioned on the same end part side as described above.

The laminated type all-solid state secondary battery 50 has, at the end part 41C of the battery element member 41 where the negative electrode tab 1b is disposed, an insulating coating body 44C that coats at least a side surface of the battery element member 41 from the outside with respect to the side surface, and the negative electrode tab 1b penetrates through the insulating coating body 44C and protrudes outward from the outer surface of the insulating coating body 44C. The insulating coating body 44C is formed of a mixture which will be described later. As described above, in a case where the end part 41C has the insulating coating body 44C, even in a case where the negative electrode tab 1b is provided, it is possible to maintain the insulating properties of the end part 41C while preventing the occurrence of deformation and defects (collapse and destruction). As a result, the all-solid state secondary battery 50 makes it possible to suppress the occurrence of a short circuit and exhibits high reliability.

As shown in Fig. 5, a recess 43C adjacent to the outer side of the positive electrode active material layer 4B in a plane direction is formed at the end part 41C of the battery element member 41 where the negative electrode tab 1b is disposed. More specifically, at the end part 41C of the battery element member 41, the recess 43C is formed adjacent to the outer side of the positive electrode active material layer 4B in a plane direction, by a side surface of a positive electrode plate (two positive electrode active material layers 4B and positive electrode collectors 5B) and two solid electrolyte layers 3B that sandwich the positive electrode plate. The recess 43C is the same as the recess 43 of the end part 41A. Like the end part 41A, the end part 41C also has the insulating coating body 44C in the recess 43C, so that the occurrence of a short circuit due to the contact between the negative electrode tab and each end part of the positive electrode collector or the positive electrode active material layer, or the like can be highly suppressed.

As shown in Fig. 5, a plurality of negative electrode tabs 1b protrude and are led out to the outside of the laminated type all-solid state secondary battery 50, that is, the outside of the insulating coating body 41C, similarly to the plurality of positive electrode tabs 5b. In this case, the plurality of negative electrode tabs 1b may be in contact with each other inside the insulating coating body 41C as long as the negative electrode tabs 1b are not in contact with the positive electrode collector 5B and the positive electrode active material layer 4B in the all-solid state secondary battery 50, but it is preferable that the negative electrode tabs 1b are not in contact with each other. The protruding portions of the negative electrode tabs 1b are not coated with the insulating coating body 41C, and are disposed, for example, along the surface of the insulating coating body 44C and are electrically connected to each other by welding or the like to be integrated. Here, the amount of the insulating coating body 44C coating the negative electrode tab 1b (the length of the negative electrode tab 1b embedded in the insulating coating body 44C in a plane direction from the connecting portion with the negative electrode collecting portion 1a) is not particularly limited, and can be set to, for example, 0.1 mm or more, and is preferably 0.5 to 2 mm.

The single layer type all-solid state secondary battery and the laminated type all-solid state secondary battery according to the embodiment of the present invention are not limited to the above-mentioned configurations and can be appropriately modified within the scope that does not impair the effects of the present invention.

For example, in the present invention, the insulating coating body does not need to integrally surround (enclose) and coat the peripheral side surface of the end part of the battery element member, and it is sufficient that the insulating coating body coats at least one end part of the battery element member, for example, an end part of the battery element member in which a short circuit, deformation, or a defect is likely to occur. In addition, in the present invention, the insulating coating body does not need to coat the main surfaces in the vicinity of the edges of the negative electrode collector and the positive electrode collector, and it is sufficient that the insulating coating body coats at least the side surface of the battery element member. In addition, in the present invention, in the case of a positive electrode collector provided with a positive electrode tab, it is preferable that the insulating coating body coats the main surface in the vicinity of the edge (a part of the positive electrode tab 5b is embedded in the insulating coating body) as shown in Fig. 4. Similarly, in the case of a negative electrode collector provided with a negative electrode tab, it is preferable that the insulating coating body coats the main surface in the vicinity of the edge as shown in Fig. 5.

In the present invention, in both the single layer type all-solid state secondary battery and the laminated type all-solid state secondary battery, the coating body intrusion region is preferably present in at least one interface between the constituent layers laminated adjacent to each other in the battery element member, more preferably present in at least one interface for at least one end part, and still more preferably present in at least one interface for each end part. For example, in the present invention, the interface at which the coating body intrusion region is present is not limited to the interface between the solid electrolyte layer and the positive electrode active material layer that are laminated adjacent to each other, and may be any interface between the constituent layers that are laminated adjacent to each other, for example, an interface between the solid electrolyte layer and the negative electrode active material layer. The coating body intrusion region is usually likely to be preferentially present at an interface where the interfacial adhesion force between the constituent layers laminated adjacent to each other is weak. For example, in a case of manufacturing an all-solid state secondary battery, the coating body intrusion region can be formed at an interface between the constituent layers that are laminated adjacent to each other without pressurization or at an interface between the constituent layers that are pressurized and bonded by setting the pressurization force to be weak. Furthermore, the coating body intrusion region may be present at a plurality of interfaces, but does not need to be present at all the interfaces. For example, in the single layer type all-solid state secondary battery and the laminated type all-solid state secondary battery, the proportion of the number of interfaces having the coating body intrusion region to all the interfaces between the constituent layers laminated adjacent to each other at one end part can be set to 5% or more and may be set to 10% to 90%. In addition, in the laminated type all-solid state secondary battery, the proportion of the number of interfaces having the coating body intrusion region to all the interfaces between the same constituent layers laminated adjacent to each other at one end part, for example, all the interfaces between the solid electrolyte layer and the positive electrode active material layer, can be set to 10% or more and may be set to 50% to 100%. In the laminated type all-solid state secondary battery, the interface where the coating body intrusion region is present is not limited to the interface between the constituent layers that form a recess, and may be an interface between the constituent layers that are set to have a large surface area of the main surface and do not form a recess.

Furthermore, in the present invention, the single layer type all-solid state secondary battery does not need to have a positive electrode active material layer, a solid electrolyte layer, and a negative electrode active material layer having the same surface area of the main surface, and the positive electrode active material layer and the negative electrode active material layer may have a dimensional difference in the surface area of the main surface. In this case, similarly to the laminated type all-solid state secondary battery 50, a recess formed by the solid electrolyte layer and the collector due to the dimensional difference is filled with the insulating coating body.

In the laminated type all-solid state secondary battery, the surface area of the main surface of the positive electrode active material layer is usually set to be smaller than that of the negative electrode active material layer. However, in the present invention, the surface area of the main surface of the negative electrode active material layer can also be set to be smaller than that of the positive electrode active material layer, and the positive electrode active material layer and the negative electrode active material layer do not need to have a dimensional difference in the surface area of the main surface and may have the same surface area of the main surface. In a case where the surface area of the main surface of the negative electrode active material layer is set to be smaller than that of the positive electrode active material layer, the end part of the laminated type all-solid state secondary battery has a recess adjacent to the outer side of the negative electrode active material layer in a plane direction.

In addition, the laminated type all-solid state secondary battery is not limited to a form in which the battery units are laminated such that the laminating order of the constituent layers is alternately reversed as shown in Fig. 3, and may be a form in which the battery units are laminated such that the laminating order of the constituent layers is the same.

The insulating coating body is formed of a mixture containing a resin material and insulating inorganic particles.

### (Resin material)

The resin material is a resin material having physical properties of melting in a temperature range of 300°C or lower. In the present invention, the phrase "thermally melted in a temperature range of 300°C or lower" means that it is thermally melted in a temperature range of 300°C or lower under one atmospheric pressure, and means that it is in a molten state at a temperature of at least 300°C.

By using this resin material in combination with insulating inorganic particles which will be described later, a mixture can be heated to a temperature at which the resin material melts while maintaining the particle shape of the insulating inorganic particles. This heating causes the mixture to melt and to deform in response to pressurization to coat the end part of the battery element member while maintaining a state of being mixed with the insulating inorganic particles. At the same time, the molten mixture permeates into the gaps of the battery element member and also flows into the recesses, filling the recesses, thus making it possible to seal or fill the end parts including the gaps and recesses. This is followed by cooling to solidify the resin material to form an insulating coating body consisting of a re-solidified mixture, thus making it possible to create a state of being coated substantially without gaps along the shape of the end part of the battery element member. In addition, the molten resin material can permeate into the constituent layer to reinforce the constituent layer (adhesion state of solid particles). Furthermore, the molten resin material, while maintaining a mixed state with the insulating inorganic particles, can intrude into the interface between the constituent layers to form a coating body intrusion region containing the insulating inorganic particles. In this manner, the end part of the battery element member is coated with the insulating coating body to provide reinforcement.

The resin material has electron-insulating properties and can maintain the end part insulating properties of the battery element member.

The resin material has physical properties of being thermally melted in a temperature range of 300°C or lower, preferably in a temperature range of 200°C or lower, and more preferably in a temperature range of 150°C or lower. Here, the fact that the resin material melts can be confirmed by the presence of a softening point at which the complex viscosity is reduced by one digit or more within a temperature change range of 40°C in the following shear test using a viscoelasticity measuring device. Therefore, in a case where the resin material has the physical properties of being thermally melted in a temperature range of XXX°C or lower, this means that the above-mentioned softening point (maximum temperature change range of 40°C) is included in the temperature range of XXX°C or lower. Here, XXX°C means 300°C, 200°C, or 150°C.

### <Test conditions>

The measurement conditions in a case where the vibration measurement is carried out using a viscoelasticity measuring device MCR302 (trade name, manufactured by Anton Paar GmbH) and a parallel plate are as follows.
Angular frequency: 6.28 rad/s
Measurement mode: temperature dependent mode
Temperature: temperature rising from 25°C to 200°C
Temperature rising rate: temperature rising from 25°C to 190°C over 400 seconds and then temperature rising to 200°C over 200 seconds

The resin material preferably has a complex viscosity of 10 Pa·s or more and 100000 Pa·s or less at 190°C. The complex viscosity at 190°C is a value measured under the above-mentioned section of <Measurement conditions>.

The resin material has physical properties of being solidified to coat the end part by being cooled after melting, and is preferably brought into a solid state at 60°C, for example.

Various resins satisfying the above-mentioned melting characteristics can be used as the resin material, examples of which include a thermoplastic resin, a thermoplastic elastomer, and a thermosetting resin, with a thermoplastic resin or a thermoplastic elastomer being preferred.

Known resins and the like can be used as the thermoplastic resin and the thermoplastic elastomer, examples of which include thermoplastic elastomers such as a polyolefin-based thermoplastic elastomer containing polyethylene, polypropylene, or the like as a hard segment, a polystyrene-based thermoplastic elastomer, a polyvinyl chloride-based thermoplastic elastomer, a polyurethane-based thermoplastic elastomer, a polyester-based thermoplastic elastomer, a polyamide-based thermoplastic elastomer, a polybutadiene-based thermoplastic elastomer, and an ethylene-vinyl acetate-based thermoplastic elastomer (EVA).

Among these, a polyolefin-based thermoplastic elastomer containing polyethylene, polypropylene, or the like as a hard segment is preferable from the viewpoint of having a less side reaction with a lithium ion battery material, while EVA is preferable from the viewpoint of easily forming a coating body intrusion region that has incorporated insulating inorganic particles. In the case of EVA, a hot melt adhesive composition is preferably used in which the content of vinyl acetate contained in EVA is preferably 11% to 28% by mass, the softening point is preferably in a range of 70°C to 115°C, and the complex viscosity at 190°C is 10 to 100 cps.

The resin material contained in the mixture may be one type or two or more types. The weight-average molecular weight of the entire resin material contained in the mixture is preferably 8000 or more and 100000 or less at the stage of forming an insulating coating body.

In the present invention, in a case of forming an insulating coating body, the resin material may be in the form of a resin (polymer), and in a case of being contained in a mixture, the resin material may be either a resin or a polymerizable compound (monomer) that forms a resin. In addition, an additive such as a polymerization initiator may be contained.

### (Insulating inorganic particles)

The insulating inorganic particles have electron-insulating properties and maintain the end part insulating properties of the battery element member.

The insulating inorganic particles have physical properties such that the insulating inorganic particles do not melt at 350°C. In addition, the insulating inorganic particles are less likely to be deformed and maintain a particle state even in a case of being pressurized during the manufacture and use of the all-solid state secondary battery, and therefore function as aggregates that resists pressurization in the insulating coating body.

By using such insulating inorganic particles in combination with the above-mentioned resin material, as described above, the mixture can be heated to a temperature at which the resin material melts while maintaining the particle shape of the insulating inorganic particles, so that a state of being coated substantially without gaps can be created along the shape of the end part of the battery element member, and the deformation of the end part of the battery element member and the occurrence of defects can be prevented by functioning as aggregates in the insulating coating body.

The insulating inorganic particles preferably have physical properties such that the insulating inorganic particles do not melt at a temperature at which the resin material melts, and preferably have physical properties such that the insulating inorganic particles do not melt at 250°C, for example. Here, the fact that the insulating inorganic particles do not melt can be easily confirmed by the absence of the above-mentioned softening point in a shear measurement test using a viscoelasticity measuring device. For the measurement, a vertical load of 50 N is applied to a parallel plate.

### <Test conditions>

The measurement conditions in a case where the vibration measurement is carried out using a viscoelasticity measuring device MCR302 (trade name, manufactured by Anton Paar GmbH) and a parallel plate are as follows.

A load of 50 N is applied to the parallel plate.
Measurement conditions: angular frequency 6.28 rad/s
Measurement mode: temperature dependent mode
Temperature: temperature rising from 25°C to 250°C
Temperature rising rate: temperature rising from 25°C to 190°C over 400 seconds and then temperature rising to 250°C over 200 seconds

Various inorganic particles can be used as the insulating inorganic particles, examples of which include particles of a metal oxide, a metal nitride, a metal carbide, a metal carbonate, and the like, with particles of a metal oxide being preferred from the viewpoint that the particles have high hardness and can be produced at low cost by baking in the atmosphere.

The metal oxide is not particularly limited and examples thereof include aluminum oxide, zirconium oxide, silicon oxide, zeolite, cerium oxide, calcium oxide, and magnesium oxide, among which aluminum oxide and silicon oxide are preferable from the viewpoint that hard particles having a uniform particle diameter can be produced at low cost.

The metal nitride, the metal carbide, and the metal carbonate are not particularly limited and examples thereof include nitrides, carbides, and carbonates of aluminum, zirconium, silicon, cerium, calcium, magnesium, and the like.

The insulating inorganic particles contained in the mixture may be one type or two or more types.

The shape of the insulating inorganic particles is not particularly limited and can be spherical, granular, flat, amorphous, or the like.

The particle diameter of the insulating inorganic particles is not particularly limited and is usually set to be smaller than the layer thickness of the constituent layer and is preferably set to be smaller than the average layer thickness of the positive electrode active material layer. Here, the particle diameter of the insulating inorganic particles is defined as a D₉₀ diameter (a diameter below which 90% of a population lies) measured using a particle diameter distribution measuring device (MT3300 (trade name), available from MicrotracBEL Corp.) according to a laser diffraction/scattering method. On the other hand, the lower limit of the particle diameter of the insulating inorganic particles is not particularly limited and is usually set to be larger than that of the solid particles forming the constituent layer. The particle diameter (D₉₀ diameter) of the insulating inorganic particles can be specifically set to 0.01 to 100 µm and is preferably 0.5 to 60 µm.

The content of the resin material in the mixture is preferably 6% to 50% by mass, more preferably 8% to 40% by mass, and still more preferably 10% to 30% by mass.

The content of the insulating inorganic particles in the mixture is preferably 50% to 94% by mass, more preferably 60% to 92% by mass, and still more preferably 70% to 90% by mass.

In the mixture, a ratio of the content of the insulating inorganic particles to the content of the resin material [content of insulating inorganic particles/content of resin material] is not particularly limited and is, for example, preferably 1 to 15.6, more preferably 1.5 to 11.5, and still more preferably 2.3 to 9.

The above-mentioned content and content ratio are also the same for the insulating coating body.

The mixture is a mixture of a resin material and insulating inorganic particles and includes a form of a mixture of a resin and insulating inorganic particles and a form of a mixture of a polymerizable compound and insulating inorganic particles, with a mixture of a resin and insulating inorganic particles being preferred. This mixture is preferably a molten solidified body obtained by melt-mixing a mixture of a resin material and insulating inorganic particles in advance and then solidifying the mixture and more preferably a molten solidified body of a resin material and insulating inorganic particles. The molten solidified body may be a molten solidified body of a mixture of a resin material that melts in a temperature range of 300°C or lower and insulating inorganic particles that do not melt at 350°C, and is preferably a molten solidified body of a mixture of a resin material that melts in a temperature range of 200°C or lower and insulating solid particles that do not melt at 250°C.

It is preferable that the mixture does not contain an insulating inorganic material having electron-insulating properties and having physical properties of being solid at 100°C (that is, having a melting point of higher than 100°C) and being thermally melted in a temperature range of 200°C or lower. Examples of such an insulating inorganic material include sulfur (sulfur single body) and/or modified sulfur, iodine, and a mixture of iodine and sulfur. In the present invention, the expression that the mixture does not contain an insulating inorganic material means that the content of the insulating inorganic material in the mixture is less than 5% by mass, with the content of the insulating inorganic material in the mixture being preferably 1% by mass or less.

### <Solid electrolyte layer>

The solid electrolyte layer is an electron-insulating electrolyte layer, and any solid electrolyte layer that is used as a solid electrolyte layer of an all-solid state secondary battery can be used without any particular limitation.

The solid electrolyte layer contains an inorganic solid electrolyte. The inorganic solid electrolyte is not particularly limited, and any of typical components can be used. Examples of the inorganic solid electrolyte include a sulfide-based inorganic solid electrolyte and an oxide-based inorganic solid electrolyte. In the present invention, the reliability of the end part of the battery element member can be improved, so it is possible to use a soft and brittle sulfide-based inorganic solid electrolyte and it is possible to realize an all-solid state secondary battery exhibiting high ion conductivity. The shape of the inorganic solid electrolyte is not particularly limited and can be spherical, granular, flat, amorphous, or the like. The particle diameter of the inorganic solid electrolyte is not particularly limited, and from the viewpoint of reinforcing the constituent layer with the insulating inorganic particles, the particle diameter of the inorganic solid electrolyte is preferably smaller than the particle diameter of the insulating inorganic particles described above and can be set to, for example, 0.5 to 20 µm. Here, the particle diameter of the inorganic solid electrolyte is defined as a D₉₀ diameter measured in the same manner as the particle diameter of the insulating inorganic particles described above. The content of the inorganic solid electrolyte in the solid electrolyte layer is not particularly limited and can be set to, for example, 90% to 99% by mass.

The solid electrolyte layer may contain a binder and other additives as appropriate. The binder and additives are not particularly limited, and each of ordinary components used in an all-solid state secondary battery can be used.

The dimensions (the surface area of the main surface) of the solid electrolyte layer are not particularly limited and may be appropriately set, and are usually set to the same dimensions as those of the negative electrode active material layer. The thickness of the solid electrolyte layer is not particularly limited and can be appropriately determined depending on the form (the number of battery units), the use application, the required characteristics, and the like of the all-solid state secondary battery. The thickness of the solid electrolyte layer can be set to, for example, 5 to 300 µm and can also be set to 30 to 50 µm.

The solid electrolyte layer can be used alone or can be used as an electrode plate that is laminated on an active material layer of a collector.

### <Negative electrode active material layer>

The negative electrode active material layer is at least an ion conductive layer, and any negative electrode active material layer that is used as a negative electrode active material layer of an all-solid state secondary battery can be used without any particular limitation.

As the negative electrode active material layer, a composite material layer which contains the above-mentioned inorganic solid electrolyte and a negative electrode active material and in which solid particles are adhered to each other can be adopted. The negative electrode active material is not particularly limited and may be a carbonaceous material, a metal oxide, a metal composite oxide, or the like. The shape of the negative electrode active material is not particularly limited and can be spherical, granular, flat, amorphous, or the like. The particle diameter of the negative electrode active material is not particularly limited, and from the viewpoint of reinforcing the negative electrode active material layer with the insulating inorganic particles, the particle diameter of the negative electrode active material is preferably smaller than the particle diameter of the insulating inorganic particles described above and can be set to, for example, 0.5 to 55 µm. Here, the particle diameter of the negative electrode active material is defined as a D₉₀ diameter measured in the same manner as the particle diameter of the insulating inorganic particles described above. The content of the negative electrode active material in the negative electrode active material layer is not particularly limited and can be set to, for example, 30% to 70% by mass. In addition, the content of the inorganic solid electrolyte in the negative electrode active material layer is not particularly limited and can be set to, for example, 30% to 70% by mass. The negative electrode active material layer may contain a conductive auxiliary agent, a binder, and other additives, which are commonly used.

The dimensions (the surface area of the main surface) of the negative electrode active material layer are not particularly limited and may be set appropriately, and may be set to the same dimensions as those of the positive electrode active material layer or may be set to dimensions larger than those of the positive electrode active material layer. In the laminated type all-solid state secondary battery, the dimensions of the negative electrode active material layer are usually set to be larger than that of the positive electrode active material layer. The dimensional difference between the negative electrode active material layer and the positive electrode active material layer is not particularly limited and can be appropriately set. The thickness of the negative electrode active material layer is not particularly limited and can be appropriately determined depending on the form (the number of battery units), the use application, the required characteristics, and the like of the all-solid state secondary battery. The thickness of the negative electrode active material layer can be set to, for example, 5 to 300 µm and can also be set to 30 to 50 µm.

The negative electrode active material layer can be used alone or can be used as a negative electrode plate that is laminated on a negative electrode collector which will be described later.

### <Positive electrode active material layer>

The positive electrode active material layer is at least an ion conductive layer, and any positive electrode active material layer that is used as a positive electrode active material layer of an all-solid state secondary battery can be used without any particular limitation.

As the positive electrode active material layer, a composite material layer which contains the above-mentioned inorganic solid electrolyte and a positive electrode active material and in which solid particles are adhered to each other can be adopted. The positive electrode active material is not particularly limited and a transition metal oxide or the like can be used. The shape of the positive electrode active material is not particularly limited and can be spherical, granular, flat, amorphous, or the like. The particle diameter of the positive electrode active material is not particularly limited, and from the viewpoint of reinforcing the positive electrode active material layer with the insulating inorganic particles, the particle diameter of the positive electrode active material is preferably smaller than the particle diameter of the insulating inorganic particles described above and can be set to, for example, 0.5 to 55 µm. Here, the particle diameter of the positive electrode active material is defined as a D₉₀ diameter measured in the same manner as the particle diameter of the insulating inorganic particles described above. The content of the positive electrode active material in the positive electrode active material layer is not particularly limited and can be set to, for example, 50% to 90% by mass. The content of the inorganic solid electrolyte in the positive electrode active material layer is not particularly limited and can be set to, for example, 10% to 50% by mass. The positive electrode active material layer may contain a conductive auxiliary agent, a binder, and other additives, which are commonly used.

The dimensions (the surface area of the main surface) of the positive electrode active material layer are not particularly limited and are appropriately set. The thickness of the positive electrode active material layer is not particularly limited and can be appropriately determined depending on the form (the number of battery units), the use application, the required characteristics, and the like of the all-solid state secondary battery. The thickness of the positive electrode active material layer can be set to, for example, 5 to 300 µm and can also be set to 30 to 50 µm.

The positive electrode active material layer can be used alone or can be used as a positive electrode plate that is laminated on a positive electrode collector which will be given below.

### <Negative electrode collector and positive electrode collector>

For each of the negative electrode collector and the positive electrode collector (hereinafter, sometimes collectively referred to as "collector" or "substrate"), any material that is used as a collector of an all-solid state secondary battery can be used without any particular limitation. Typically, a metal plate (foil) of aluminum, an aluminum alloy, copper, a copper alloy, stainless steel, nickel, iron, titanium, or the like is used.

A thin plate-shaped collector having a collecting portion that is laminated adjacent to an active material layer and a tab that is consecutively installed to protrude from one end of the collecting portion can be used as the collector, and it is preferable that the collector has at least one positioning hole from the viewpoint that the battery unit or the battery element member can be produced in a shorter lamination time while maintaining high overlapping accuracy. The tab is usually not in contact with the active material layer, and for example, an insulating portion or the like is provided between the tab and the portion installed consecutively with the collecting portion or the end part of the active material layer.

The shape of the collector is not particularly limited and is appropriately determined depending on the shape of the all-solid state secondary battery or the like. The collecting portion of the collector preferably has a thin plate shape which is rectangular in a plan view, typically rectangular.

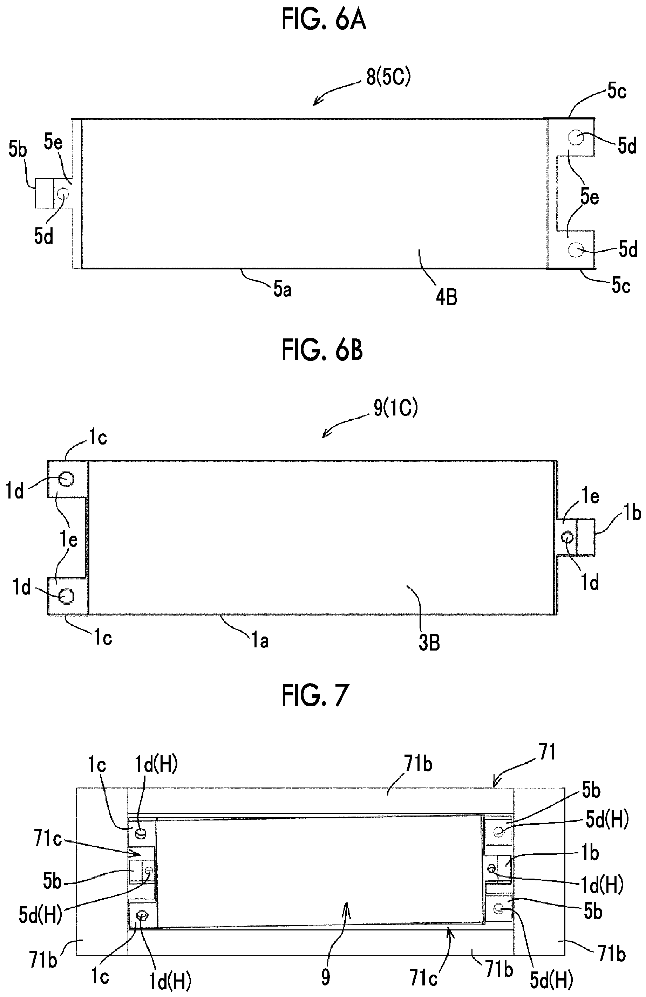

A preferred form of the collector may be, for example, a thin plate-shaped collector having a collecting portion, a tab that is consecutively installed to protrude from one end of the collecting portion, and a substrate extending portion that is consecutively installed to protrude from the other end of the collecting portion (preferably, an edge of the opposite side to the one end with the collecting portion interposed therebetween). Examples of such a preferred collector include a positive electrode collector 5C corresponding to a positive electrode plate 8 shown in Fig. 6A and a negative electrode collector 1C corresponding to a negative electrode plate 9 shown in Fig. 6B. Fig. 6A shows the positive electrode plate 8 in which the positive electrode active material layer 4B is formed on the positive electrode collecting portion 5a. Fig. 6B shows the negative electrode plate (also referred to as a negative electrode plate with an electrolyte layer) 9 in which the negative electrode active material layer 2B (not shown in the drawing) and the solid electrolyte layer 3B are formed in this order on the negative electrode collecting portion 1a.

As shown in Fig. 6A, the positive electrode collector 5C has the positive electrode collecting portion 5a having a rectangular shape in a plan view, a pair of substrate extending portions 5c that extend to protrude in a substantially rectangular shape from the vicinity of both ends (long side edges) of one short side edge thereof, and one positive electrode tab 5b that extends to protrude in a substantially rectangular shape from a substantially center of the other short side edge. A region for preventing a short circuit and being in contact with the positive electrode collecting portion 5a is provided between the pair of substrate extending portions 5c and on the edge of the positive electrode collecting portion 5a on the positive electrode tab 5b side. Similarly, as shown in Fig. 6A, the negative electrode collector 1C has the negative electrode collecting portion 1a having a rectangular shape in a plan view, a pair of substrate extending portions 1c that extend to protrude in a substantially rectangular shape from the vicinity of both ends (long side edges) of one short side edge thereof, and one negative electrode tab (also referred to as a lead portion) 1b that extends to protrude in a substantially rectangular shape from a substantially center of the other short side edge.

The positive electrode collecting portion 5a and the negative electrode collecting portion 1a are each a region that is laminated adjacent to the active material layer, and are each a region where the positive electrode active material layer 4B or the negative electrode active material layer 2B is formed.

The positive electrode tab 5b and the negative electrode tab 1b (hereinafter, sometimes collectively referred to as a tab) are each a member that serves as a lead tab in an all-solid state secondary battery, and one circular positioning hole 5d or 1d is drilled in the inside thereof, for example, in the substantially central portion. In each of the pair of substrate extending portions 5c and 1c, one circular positioning hole 5d or 1d is drilled in the inside thereof, for example, in the substantially central portion. The dimensions of the substrate extending portions 5c and 1c and the tabs are each appropriately determined. In a case where a collector having a tab or a substrate extending portion is used, and then in a case where a mixture is pressed against an end part (usually both end parts on a long side) of a collector not having a tab or a substrate extending portion and an end part (usually both end parts on a short side) of a collector having a tab or a substrate extending portion to cause the mixture to flow inward and fill a recess of a battery element member, it is necessary to remove the mixture that has adhered to the tab or the substrate extending portion before welding. In order to avoid such a cumbersome work, as in Example C which will be described later, the tab can be made long so that the mixture does not adhere to the welded portion.

As shown in Fig. 6A and Fig. 6B, the region including a positioning hole on the side of the collecting portion of the tab, the entire surface of the substrate extending portion, and more preferably the above-mentioned region for preventing a short circuit are each preferably coated with an insulating material such as an insulating resin, and more preferably a mixture (molten solidified body) which will be described later. For example, as will be described later, a tape-shaped molded body (molten solidified body) 5e or 1e obtained by molding the mixture into a tape shape is attached. By being coated with the insulating material, particularly the mixture, it is possible to effectively suppress deformation, damage, and the like of the tab and the substrate extending portion during collective positioning using the positioning hole in a preferred production method of a battery element member which will be described later, and as a result, the battery element member or the battery unit can be produced in a shorter lamination time while maintaining high overlapping accuracy. In addition, in a case of being coated with the mixture, an insulating coating body can be formed by a manufacturing method which will be described later.

The shape of the positioning holes 1d and 5d is preferably similar to a cross-sectional shape of a positioning pin, which will be described later, perpendicular to an axis, and can be, for example, circular, elliptical, polygonal, or star-shaped, with the shape of the positioning hole being preferably circular. The inner diameter of the positioning hole is not particularly limited and is appropriately determined depending on the size of the battery element member and the like. As an example, the inner diameter of the positioning hole can be set to, for example, 1.0 to 6.0 mm.

The collectors may be the same as or different from each other, for example in terms of shape and positioning hole, and it is preferable that the positive electrode collector and the negative electrode collector are the same as each other.

The dimensions (the length and width of the main surface) of the collector are not particularly limited and can be appropriately determined depending on the use application, the required characteristics, and the like. In general, it is preferable that the portions (the collecting portion and the region for preventing a short circuit) excluding the tab and the substrate extending portion have the same shape with substantially the same dimensions, but with regard to the collecting portion, it is more preferable that the positive electrode collecting portion 5a has a smaller surface area of the main surface than the negative electrode collecting portion 1a. The thickness of the collector is also not particularly limited and can be appropriately determined depending on the form (the number of battery units), the use application, the required characteristics, the strength, and the like of the all-solid state secondary battery. The thickness of the collector can be set to, for example, 5 to 30 µm.

### <Other configurations>

In the present invention, a functional layer may be provided between the adjacent constituent layers, and a protective member such as a housing or a film may be provided on the outside of the all-solid state secondary battery. In addition, the constituent layer may be composed of a single layer or may be composed of a plurality of layers.

### [Manufacturing method of all-solid state secondary battery]

The manufacturing method of an all-solid state secondary battery according to the embodiment of the present invention (sometimes simply referred to as the manufacturing method according to the embodiment of the present invention) includes a step of disposing a mixture of a resin material that melts in a temperature range of 300°C or lower and insulating inorganic particles that do not melt at 350°C, at an end part of a battery element member including one or more laminated units each including at least a negative electrode active material layer, a solid electrolyte layer, and a positive electrode active material layer laminated in this order; and a step of pressurizing the mixture against the battery element member in an inward direction while heating the mixture at a temperature at which the resin material melts.

According to the manufacturing method according to the embodiment of the present invention having the above-mentioned steps, the end part of the battery element member can be filled with the above-mentioned insulating coating body without any gaps, and therefore an all-solid state secondary battery can be manufactured which is less susceptible to deformation and defects while maintaining the insulating properties of the end part of the constituent layer.

In the manufacturing method according to the embodiment of the present invention, each of the step of disposing the mixture and the pressurizing step can be carried out on all the end parts of the battery element member at once, can be sequentially carried out on each end part, or can be carried out on one end part in a plurality of separate steps. For example, in a case where a collector having a rectangular collecting portion is used, each step can be carried out on one end part of two opposing end parts and then on the other end part. In a case where each of the steps is carried out in a plurality of separate steps or sequentially, the steps carried out a plurality of times may be the same as or different from each other. Examples of the step of disposing the mixture include a step of disposing the mixture on a tab or the like of a collector in advance and a step of disposing the mixture after a battery element member is produced. In addition, examples of the heating step include a step which will be described later.

In the manufacturing method according to the embodiment of the present invention, the step of disposing the mixture is carried out in a state where a battery element member is pressurized in a lamination direction; that is, a step of pressurizing, in a lamination direction, a battery element member including one or more laminated units each including at least a negative electrode active material layer, a solid electrolyte layer, and a positive electrode active material layer laminated in this order; and a step of disposing the mixture at the end part of the battery element member pressurized in a lamination direction can be carried out in this order.

In the manufacturing method according to the embodiment of the present invention, it is preferable that the above-mentioned pressurizing step is carried out in a state where a battery element member is pressurized in a lamination direction; that is, a step of pressurizing, in a lamination direction, a battery element member including one or more laminated units each including at least a negative electrode active material layer, a solid electrolyte layer, and a positive electrode active material layer laminated in this order; a step of disposing the mixture at the end part of the battery element member pressurized in a lamination direction; and a step of pressurizing the mixture against the battery element member pressurized in a lamination direction in an inward direction of the battery element member while heating the mixture at a temperature at which the resin material melts are carried out in this order. According to a preferred method of pressurizing the battery element member in a lamination direction, the battery element member is pressurized in a lamination direction before or while the mixture is pressurized against the end part of the battery element member, so the intrusion of the mixture, which occurs by the pressurization of the mixture against the battery element member in an inward direction, can be restricted to the end part region of the constituent layer having a non-uniform layer thickness and the intrusion of the mixture to the center region of the constituent layer having a uniform layer thickness can be effectively suppressed, thus making it possible to prevent a decrease in battery capacity due to the insulating mixture being interposed between the constituent layers. In addition, it is possible to prevent a variation in the laminated state of the battery element member caused by a load that acts in a case where the mixture is pressurized against the battery element member in an inward direction.

In the manufacturing method according to the embodiment of the present invention, in the above-mentioned pressurizing step, the mixture disposed at the end part of the battery element member is pressurized against the battery element member in an inward direction to cause the mixture to deform and flow. At this time, it is preferable to pressurize the mixture in a lamination direction, for example, by pressurizing the battery element members in a lamination direction, thereby preventing the deformation and flow of the mixture in that direction, while deforming and flowing the mixture toward the inside of the battery element member. The deformation and flow of such a mixture can be preferably achieved, for example, by a method that carries out, in the following order, a step of disposing the mixture at an end part of a battery element member including one or more laminated units each including at least a negative electrode active material layer, a solid electrolyte layer, and a positive electrode active material layer laminated in this order, and a step of heating the mixture at a temperature at which the resin material melts, followed by pressurization in an inward direction to deform and flow the mixture while restricting the deformation and flow of the mixture in the lamination direction of the battery element member. In this method, it is preferable that the mixture has a layer thickness that is greater than the thickness of the end part of the battery element member adjacent to the mixture, preferably the thickness of the active material, from the viewpoint that this makes it easier to achieve the deformation and flow of the mixture in an inward direction. In addition, in this method, before or after the step of disposing the mixture, a step of disposing a flow restriction member at the front and rear of the lamination direction of the battery element member by pressurizing the battery element member in a lamination direction to restrict the deformation and flow of the mixture in that direction can be carried out. In the manufacturing method having this step, the above-mentioned pressurizing step can also be carried out, but it is preferable that the above-mentioned pressurizing step is carried out by heating the mixture while moving the flow restriction member in a lamination direction to pressurize the battery element member, thereby (indirectly pressurizing) the mixture to deform and flow in an inward direction. In this manufacturing method as well, the step of disposing the mixture and the pressurizing step can be carried out in a plurality of separate steps. According to this manufacturing method, the mixture can be easily deformed and flowed in the inward direction of the battery element member, and the mixture can be allowed to intrude into the end part of the constituent layer, particularly the end part of the constituent layer having an uneven layer thickness, which makes it possible to reinforce the end part in addition to ensuring the insulating properties. This method is particularly effective in a form in which the mixture is disposed on the collector in advance.

### <Production or preparation of battery element member>

In the manufacturing method according to the embodiment of the present invention, first, a battery element member is produced or prepared.

In a case of manufacturing a single layer type all-solid state secondary battery, a battery element member having a layer configuration shown in Fig. 1 is produced. The production method is not particularly limited and may be, for example, a film forming method or a molding method, each using a composition containing solid particles. For example, the single layer type all-solid state secondary battery can be produced in such a manner that a positive electrode composition containing a positive electrode active material and an inorganic solid electrolyte, an electrolyte composition containing an inorganic solid electrolyte, and a negative electrode composition containing a negative electrode active material and an inorganic solid electrolyte are prepared, the negative electrode composition, the electrolyte composition, and the positive electrode composition are sequentially applied onto a negative electrode collector and dried, and then a positive electrode collector is placed thereon. The application method and drying conditions for each composition can be appropriately determined.

In a case of manufacturing a laminated type all-solid state secondary battery, each constituent layer may be formed in sequence in the same manner as in the case of the above-mentioned single layer type all-solid state secondary battery, but a method is preferred in which electrode plates having active material layers formed on both main surfaces of collectors are produced and laminated with a solid electrolyte layer interposed therebetween. For example, a negative electrode plate having a negative electrode active material layer on both main surfaces of a negative electrode collector, and a positive electrode plate having a positive electrode active material layer on both main surfaces of a positive electrode collector are produced. A predetermined number of negative electrode plates, each having a solid electrolyte layer produced separately transferred onto the surface of a negative electrode active material layer, and a predetermined number of positive electrode plates are alternately laminated to produce a battery element member. Here, the battery element member may be pressurized in a lamination direction to be densified. Each of the constituent layers can be formed in the same manner as in the case of the single layer type all-solid state secondary battery.

In the manufacturing method according to the embodiment of the present invention, it is preferable that a predetermined number of electrode plates formed using the collector having the above-mentioned positioning hole are laminated and positioned all at once (collectively) to manufacture a battery element member (sometimes referred to as a preferred production method of a battery element member), from the viewpoint that it is possible to shorten the production time (lamination time) by positioning a plurality of electrode plates all at once while maintaining high overlapping accuracy, and it is possible to produce a battery element member with high productivity. Specifically, it is preferable that a plurality of negative electrode plates with an electrolyte layer, each having a negative electrode active material layer and a solid electrolyte layer on both main surfaces of the negative electrode collector having the above-mentioned positioning hole, and a plurality of positive electrode plates, each having a positive electrode active material layer on both main surfaces of the positive electrode collector having the above-mentioned positioning hole, are alternately laminated, and then the electrode plates are positioned all at once using the positioning holes, for example, by inserting positioning pins which will be described later into the positioning holes that communicate with each other in the lamination direction of the electrode plates, to produce a battery element member. In this case, since the tab and the substrate extending portion of each collector are coated with an insulating material, preferably a mixture which will be described later, deformation, damage, and the like of the tab and the substrate extending portion can be effectively suppressed during the collective positioning using the positioning holes.

A preferred production method of a battery element member has the following step 1 and step 2.

Step 1: a step of alternately placing a rectangular positive electrode plate having a positioning hole and a rectangular negative electrode plate having a positioning hole with a solid electrolyte layer interposed therebetween and temporarily positioning the electrode plates to obtain a temporarily laminated electrode plate group in which the positioning holes communicate with each other in a lamination direction

Step 2: a step of inserting a positioning pin into the communication hole that has appeared in the step of obtaining a temporarily laminated electrode plate group, until the positioning pin protrudes from the other opening side to one opening side, and carrying out the main positioning of the rectangular positive electrode plate and the rectangular negative electrode plate that constitute the temporarily laminated electrode plate group

In the step 2, it is preferable to insert the positioning pin while restricting a variation in a lamination direction on one opening side of the communication hole, for example, a region in the electrode plate where the positioning hole is drilled.

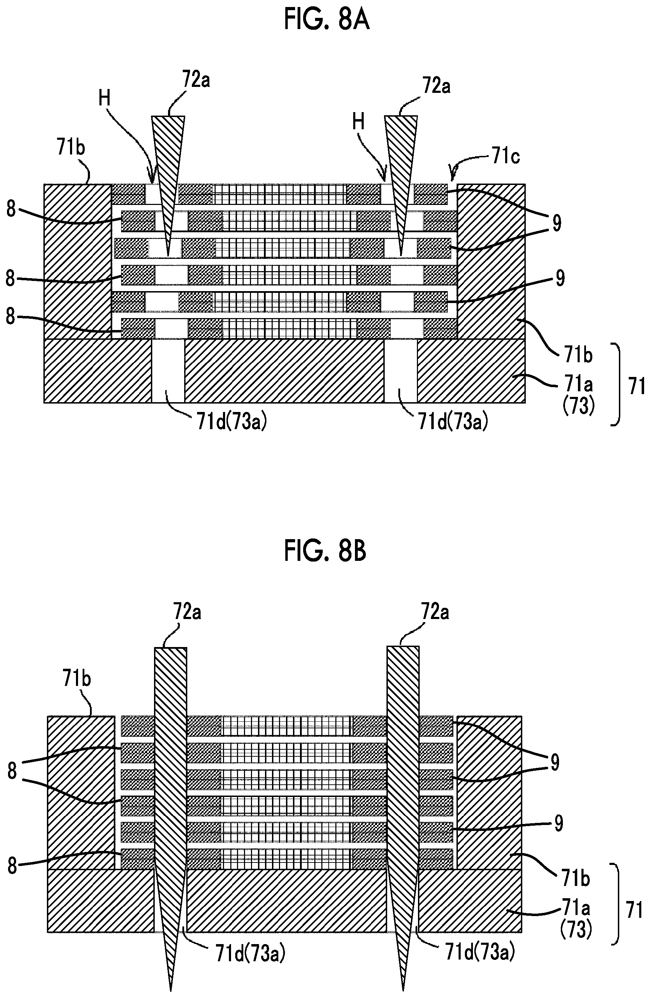

Here, the communication hole refers to that a plurality of positioning holes arranged on a line along the lamination direction of a plurality of laminated electrode plates overlap each other in a plan view as shown in Fig. 7 and Fig. 8A and can be visually recognized from the uppermost positioning hole through the lowermost positioning hole.

The preferred production method of the battery element member can be carried out using an appropriate device. For example, it is preferred to carry out the production method using a manufacturing device having an electrode plate group accommodating frame, a positioning jig, and a restricting member, from the viewpoint that this makes it possible to carry out the manufacture of the battery element member and the formation of the insulating coating body. The electrode plate group accommodating frame is a frame for temporarily laminating a plurality of electrode plates such that communication holes through which the positioning holes communicate with each other are formed, and is preferably an electrode plate group accommodating frame which will be described below. The positioning jig is a jig having a positioning pin erected thereon for being inserted into the communication hole to position the electrode plate, and is preferably a positioning jig which will be described below. The restricting member is a member that restricts a variation in a lamination direction on one opening side of the communication hole, and is preferably a restricting member which will be described below.

Electrode plate group accommodating frame: an electrode plate group accommodating frame that has an accommodation space for accommodating a rectangular positive electrode plate having a positioning hole and a rectangular negative electrode plate having a positioning hole, in a state of being alternately laminated with a solid electrolyte layer interposed therebetween, in which the rectangular positive electrode plate and the rectangular negative electrode plate are temporarily positioned by being accommodated in the accommodation space, thereby forming the temporarily laminated electrode plate group in which the positioning holes communicate with each other

Positioning jig: a positioning jig that is provided to be relatively movable forward or rearward in the lamination direction of the temporarily laminated electrode plate group and on which the positioning pin that is inserted into the positioning hole is erected

Restricting member: a restricting member that is relatively movable to a position facing the positioning jig (the positioning pin) across the electrode plate group accommodating frame and that is provided to be relatively movable close to and away from the positioning jig, the restricting member having a restricting portion that restricts a variation in a lamination direction on one opening side of the communication hole through which the positioning holes communicate with each other, and a pin receiving portion that is provided in the restricting portion and receives the positioning pin (that passes through the positioning hole)

A manufacturing device 70 which is one embodiment of the above-mentioned manufacturing device, and a preferred production method of a battery element member and a laminated type all-solid state secondary battery using the manufacturing device 70 will be described with reference to Fig. 7 to Fig. 11.

Fig. 7 is a schematic top view showing a state in which a plurality of electrode plates are accommodated in an accommodation space 33 of a frame 3 and temporarily positioned in the preferred production method of a battery element member using the preferred manufacturing device 70.

Fig. 8A is a schematic cross-sectional view illustrating an initial state in the main positioning step in the preferred production method of a battery element member using the preferred manufacturing device 70, and shows a cross section taken along a plane perpendicular to a longitudinal direction of the frame 3 and passing through a center of a pin receiving portion 73a. Fig. 8B is a schematic cross-sectional view illustrating a completed state of the main positioning step in the preferred production method of a battery element member using the preferred manufacturing device 70, and shows a cross section taken along a plane perpendicular to a longitudinal direction of the frame 3 and passing through the center of the pin receiving portion 73a. Fig. 8A and Fig. 8B (collectively referred to as Fig. 8) show only the vicinity of the communication hole of the electrode plate in the main positioning step. In Fig. 8, the number of the electrode plates accommodated in the accommodation space is illustrated to be smaller than the number of the electrode plates used in Example D in order to ensure visibility.

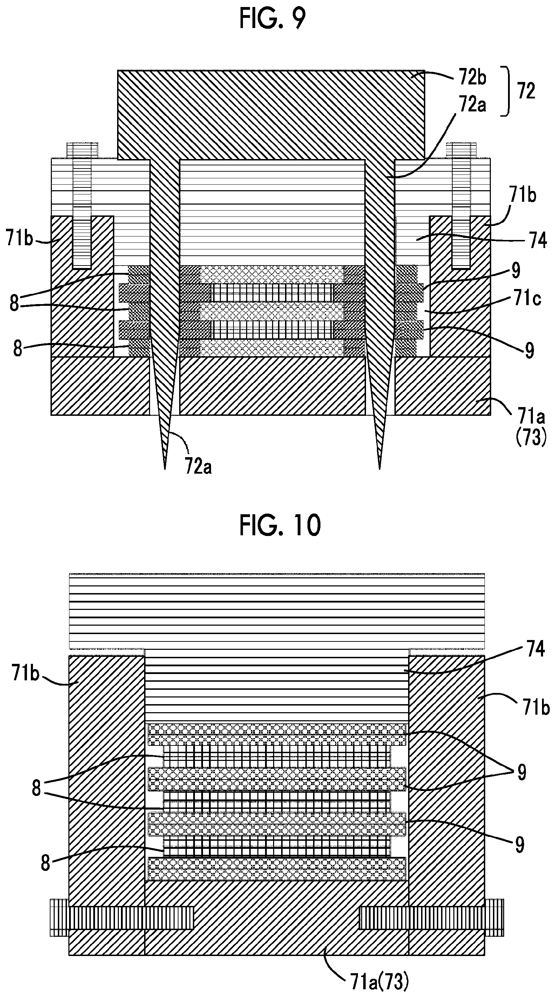

Fig. 9 is a schematic cross-sectional view showing a state in which the battery element member subjected to main positioning is pressurized and restrained in a lamination direction in a preferred manufacturing method of a laminated type all-solid state secondary battery using the preferred manufacturing device 70, and shows a cross section taken along a plane perpendicular to a longitudinal direction of the frame 3 and passing through the center of the pin receiving portion 73a.

Fig. 10 is a schematic cross-sectional view showing a state in which the battery element member subjected to main positioning is pressurized and restrained in a lamination direction in a preferred manufacturing method of a laminated type all-solid state secondary battery using the preferred manufacturing device 70, and shows a cut surface perpendicular to a longitudinal direction of the frame 3 and approximately at a center in the longitudinal direction.

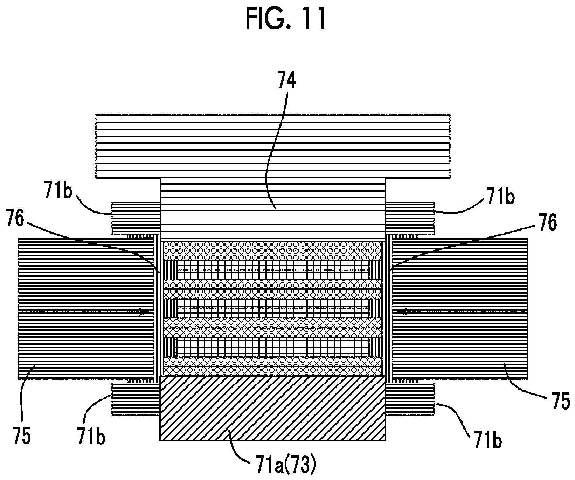

Fig. 11 is a schematic cross-sectional view illustrating a method of forming an insulating coating body on an end part of a battery element member by disposing a rod-shaped molded body in the vicinity of the end part of the battery element member and pressurizing the rod-shaped molded body in a preferred manufacturing method of a laminated type all-solid state secondary battery using the preferred manufacturing device 70.

Although the number of laminated electrode plates in the battery element member may differ in Fig. 8 to Fig. 11, this is only a difference on the drawings, and naturally the numbers will match in the actual manufacturing method.

The manufacturing device 70 may comprise an electrode plate group accommodating frame 71, a positioning jig 72, and a restricting member 73, and may also comprise other constituent devices (mechanisms) as appropriate, such as a transport device that transports the electrode plate into the accommodation space, and a device that transports the electrode plate group accommodating frame, the positioning jig, or the like.

In the manufacturing device 70, a direction in which the electrode plates are laminated (a direction of gravity) is referred to as an up-down direction, and a forward direction of a positioning pin 72a in this direction is referred to as a down direction. In the present invention, the term "electrode plate" refers to any one or both of a positive electrode plate and a negative electrode plate.

The electrode plate group accommodating frame (sometimes simply referred to as a frame) 71 is a box (single-side opening frame) having a rectangular bottom portion 71a and side walls (peripheral walls) 71b erected from the bottom portion 71a, as shown in Fig. 7 and Fig. 8, for example, and has an accommodation space 71c surrounded by these. The accommodation space 71c is set in a shape and dimensions that allow communication between the positioning holes drilled in the substrate extending portion and the tab positioned in a lamination direction by accommodating a plurality of (a predetermined number of) electrode plates (here, negative electrode plates 9 with an electrolyte layer and positive electrode plates 8) in a state of being alternately laminated with solid electrolyte layers interposed therebetween. The shape and dimensions of such an accommodation space 71c are determined depending on the shape or dimensions of the electrode plate, the drilling position, number, shape, or dimensions of the positioning hole, the loading speed, and the like. Usually, the accommodation space 71c has a rectangular shape in a plan view, similar to the electrode plate, and a depth thereof is appropriately determined depending on the thickness, number, and the like of the electrode plates to be laminated. As shown in Fig. 7, it is preferable that the inner dimensions of the frame 71 (the dimensions of the accommodation space 71c) are set to be larger than the dimensions of the electrode plate (the larger dimensions in a case where the dimensions of the negative electrode plate 9 with an electrolyte layer and the positive electrode plate 8 are different from each other) to such an extent that the communication hole is formed in the positioning hole.

Among the side walls 71c erected from the bottom portion 71a, the side walls on the long sides are all provided on the bottom portion and the side walls on the short sides so as to be removable from the bottom portion and the side walls on the short sides or to be close to and away from the bottom portion and the side walls on the short sides. In a case where the side walls on the long sides are provided in this manner, an insulating coating body can be provided at the long side end part of the battery element member in addition to the production of the battery element member.

A hole 71d (see Fig. 8) through which a positioning pin passes is provided in the bottom portion 71a at a position corresponding to the positioning pin 72a erected on the positioning jig 72a, which will be described below.

As shown in Fig. 9, the positioning jig 72 may be a member having the positioning pin 72a erected on a flat base (not shown in Fig. 7 and Fig. 8) 72b, and the cross-sectional shape perpendicular to the axis, erected position, disposition, and the like of the positioning pin 72a are determined in accordance with the shape, drilling position, disposition, and the like of the positioning holes in the electrode plates 8 and 9. In the present invention, the positioning jig may not have the flat base, and a positioning pin may be used alone.

The shape of the positioning pin 72a is not particularly limited as long as the positioning pin 72a can be inserted into the positioning hole to position the electrode plate, but usually, as shown in Fig. 9, it is preferable that the positioning pin 72a has a pin body portion (also referred to as a body portion) having a diameter smaller than an inner diameter of the positioning hole and a pointed tip portion (also referred to as a tapered portion) that extends from one end of the pin body portion. The cross-sectional shape perpendicular to the axis of the pointed tip portion and the pin body portion is not particularly limited, and can be, for example, circular, elliptical, polygonal, or star-shaped, with the cross-sectional shape being preferably circular. As will be described later, the pointed tip portion exhibits, with a peripheral side surface that gradually increases in diameter, a function of guiding the positioning pin 72a to be inserted into the communication hole, and a function of assisting an overlapping position adjustment function of the pin body portion. In addition, the pin body portion is sequentially inserted into the communication hole from a tip of the pointed tip portion to exhibit the overlapping position adjustment function of changing the electrode plate with the deviated overlapping position with an outer peripheral surface thereof coming into contact with an inner periphery (inner surface) of the positioning hole and adjusting the electrode plate to a predetermined overlapping position. In a case where such a pointed tip portion is provided, the positioning pin 72a is easily inserted into the communication hole that appears in the temporarily laminated electrode plate group, and the electrode plates can be positioned with high accuracy while preventing breakage, damage, or the like of the substrate extending portion due to the insertion of the positioning pin 72a.

The outer diameter of the pin body portion is appropriately determined depending on the inner diameter of the positioning hole and the like. The length of the pin body portion may be a length that passes through the positioning hole of the temporarily laminated electrode plate group, and is appropriately determined.

The restricting member 73 may be a member having a restricting portion and a pin receiving portion (pin receiving hole) that is drilled in a flat base, and in the manufacturing device 70, the bottom portion 71a of the frame 71 also serves as the restricting member 73. The surface of the bottom portion 71a (the bottom surface of the accommodation space 71c) acts as a restricting portion that restricts the displacement of the tab or substrate extending portion, that is, the displacement of the appeared communication hole H in a case where the main positioning is carried out (in a case where the positioning pin 72a is inserted).

The drilling position, disposition, and the like of the pin receiving portion 73a (hole 71d) are determined in accordance with the erected position, disposition, and the like of the positioning pin 72a. The pin receiving portion 73a may be formed to allow the positioning pin 72a to be inserted thereinto, and is determined to have appropriate dimensions depending on an outer diameter, an insertion amount, and the like of the pin receiving portion 73a.

It is preferable that the manufacturing device 70 has a correction member 74 that corrects the electrode plates 8 and 9 laminated in the accommodation space 71c to be flat. Examples of such a correction member 74 include a plate-shaped member having a flat surface and a block-shaped member, and a press machine or the like can also be used. In the manufacturing device 70, the correction member 74 only needs to have dimensions capable of correcting the electrode plate in a lamination direction, and is formed to have, for example, the same dimensions as the main surface dimensions of the accommodation space 33 of the frame 3, and is provided on the surface of the lid body of the frame 71 on the accommodation space side as shown in Fig. 9 and the like.

As shown in Fig. 9, the correction member 74 is accommodated in the accommodation space 33 and functions as a pressing restricting member that presses the temporary laminated electrode plate group (battery element member) subjected to the main positioning in a lamination direction and restricts the deformation and flow of the mixture in a lamination direction (also serves as the pressing restricting member), which is preferable from the viewpoint that this makes it possible to prevent the deformation and flow of the mixture in a lamination direction and allow the mixture to deform and flow in an inward direction in the pressurizing step which will be described later. In a case where the correction member 74 also serves as the pressing restricting member, the correction member 74 has a thickness that enables it to press the temporary laminated electrode plate group subjected to the main positioning in a lamination direction together with the restricting member 73. In the present invention, the pressing restricting member can also be referred to as a flow restricting member from the viewpoint of restricting the deformation and flow. In the present invention, the correction member 74 and the pressing restricting member may be separate members, and the restricting member and the pressing restricting member may be collectively referred to as the flow restricting member.

Each of devices constituting the manufacturing device 70 may be formed of an appropriate material. It is preferable that a portion of a transport device or the like that comes into contact with an active material layer is formed of a resin, rubber, or the like to prevent damage to the active material layer.

Hereinafter, a preferred production method of a battery element member will be described using the manufacturing device 70 as an example.

### (Step 1)

In the preferred production method of a battery element member, a rectangular positive electrode plate and a rectangular negative electrode plate (sometimes simply referred to as a positive electrode plate or a negative electrode plate) are used as the electrode plates. Therefore, in the present invention, the term "electrode plate" collectively refers to a positive electrode plate and a negative electrode plate, unless otherwise specified.

First, the positive electrode plate 8 shown in Fig. 6A and the negative electrode plate 9 with an electrolyte layer shown in Fig. 6B are produced.

The positive electrode collector 5C constituting the positive electrode plate 8 is as described above. The positive electrode active material layer 4B is formed on the surface of the positive electrode collecting portion 5a of the positive electrode collector 5C by an appropriate method to produce the positive electrode plate 8. On the other hand, the negative electrode plate 9 with an electrolyte layer is produced by laminating and forming the negative electrode active material layer 2B and the solid electrolyte layer 3B in this order on the surface of the negative electrode collecting portion 1a of the above-mentioned negative electrode collector 1C constituting the negative electrode plate 9 by an appropriate method. As shown in Fig. 6A and Fig. 6B, the positive electrode plate 8 and the negative electrode plate 9 are each coated with a mixture (molten solidified body) which will be described later in all of the region including the positioning hole on the collecting portion side of the tab, the entire surface of the substrate extending portion, and the region for preventing a short circuit. The method of coating with the mixture is as described above.

Next, as shown in Fig. 7, a plurality of (a predetermined number of) negative electrode plates 9 and a plurality of (a predetermined number of) positive electrode plates 8 are accommodated in the accommodation space 71c of the frame 71 in a state of being alternately laminated with solid electrolyte layers interposed therebetween so that the main surfaces are in contact with each other, and are subjected to temporary positioning. For example, it is preferable that a plurality of negative electrode plates (see Fig. 6B) 9 having the negative electrode active material layer 2B and the solid electrolyte layer 3B on both main surfaces of the negative electrode collector 1C having the above-mentioned positioning hole 1d and a plurality of positive electrode plates (see Fig. 6B) 8 having the positive electrode active material layer 4B on both main surfaces of the positive electrode collector 5C having the above-mentioned positioning hole 5d are alternately laminated. In this case, the direction in which the plurality of negative and positive electrode plates are laminated and the position where the tabs are disposed are not particularly limited, and the electrode plates and the tabs may be on the same side. In the present invention, as shown in Fig. 7, it is preferable that, for the plurality of negative and positive electrode plates, the same electrode plates are laminated in a direction in which the substrate extending portion and the tab are each positioned on the same side in the long side direction of the same electrode plate, and that the negative electrode plate 9 and the positive electrode plate 8 are laminated in a direction in which the substrate extending portion and the tab are positioned on opposite sides to each other in the long side direction of the electrode plate. In other words, it is preferable that the positive electrode tab 5b and the negative electrode tab 1b are laminated in opposite directions so as not to overlap with each other in the lamination direction of the electrode plate.

Here, the electrode plates 8 and 9 placed (accommodated) in the accommodation space 71c are temporarily positioned by the accommodation space 71c, and in the electrode plate group of the same polarity, the positioning holes that are consecutive in the lamination direction do not completely deviate from the other positioning holes in the plane direction, and at least partially overlap with each other. As a result, the positioning holes 1d of the negative electrode plates 9 communicate with each other (in an overlapping region) in a lamination direction (direction of gravity) with an interval therebetween, and the communication hole H appears inside each positioning hole 1d. In addition, in the case of the positioning holes 5d of the positive electrode plates 8, similarly, the positioning holes 5d communicate with each other in a lamination direction with an interval therebetween, and the communication hole H appears inside each positioning hole 5d. In this manner, a temporarily laminated electrode plate group in which the positioning holes provided in the same electrode plates communicate with each other is obtained.

In a suitable manufacturing method according to the embodiment of the present invention, the temporary laminated electrode plate group can also be pressed or pressurized in a lamination direction to flatten the electrode plates or to bring the electrode plates into close contact with each other. Accordingly, the appearance of the communication hole H can be assisted or the size of the communication hole can be increased.

### (Step 2)

In the preferred production method of a battery element member, the main positioning step is then carried out.

As shown in Fig. 8, the positioning pins 72a of the positioning jig 72 are inserted into each of the communication pores H that have appeared in the step 1. In this case, as shown in Fig. 8A, the pointed tip portion of the positioning pin 72a first enters the communication hole H, then, as shown in Fig. 8B, the pin body portion enters the communication hole H, and finally, the positioning pin 72a is inserted into the appeared communication hole H (inserted until the positioning pin 72a protrudes from the other opening side of the communication hole to one opening side). Here, the pointed tip portion that first enters the communication hole H guides the entry of the pin body portion into the communication hole H with the peripheral side surface that gradually increases in diameter, and assists in adjusting the overlapping position of the pin body portion. Next, the pin body portion enters the communication hole H following the pointed tip portion, so that the outer peripheral surface thereof comes into contact with the inner peripheral surface of the positioning hole, whereby the electrode plate with the deviated overlapping position can be shifted in its plane direction (horizontal direction) to be positioned at a predetermined overlapping position. Here, the tab or the substrate extending portion, that is, the appeared communication hole H is restricted by the restricting member 73 from displacing the positioning pin 72a in the forward direction, so that the insertion is quickly completed. Moreover, the substrate extending portion and the tab are coated and reinforced with an insulating material, preferably a mixture, as described above, so that, in a case where the positioning pin 72a is inserted, the insertion is completed quickly without damaging the substrate extending portion and the tab, particularly the positioning hole. In the example shown in Fig. 8, the positive electrode plate 8 and the negative electrode plate 9 are each positioned by three positioning pins 72a.

In this manner, the pin body portion exhibits the overlapping position adjustment function. As a result, a plurality of electrode plates can be moved in the plane direction (a direction perpendicular to an insertion direction of the positioning pin) to adjust the overlapping positions of the electrode plates with high accuracy while preventing the substrate extending portion and the tab, particularly the positioning hole H, from being broken, damaged, or the like, and therefore the temporarily laminated electrode plate group that has been temporarily positioned can be precisely subjected to main positioning.

In the preferred production method of a battery element member, the battery element member 41 can be simply manufactured as described above.

Hereinafter, a manufacturing method of a laminated type all-solid state secondary battery will be described using the manufacturing device 70 as an example. The manufacturing method of a single layer type all-solid state secondary battery is the same as the manufacturing method of a laminated type all-solid state secondary battery, except that one battery unit is used as the battery element member.

### <Preparation or production of mixture>

In the manufacturing method according to the embodiment of the present invention, a mixture of a resin material that melts in a temperature range of 300°C or lower and insulating inorganic particles that do not melt at 350°C is produced or prepared. The mixture can be prepared by mixing a resin material and insulating inorganic particles, but it is preferable to melt-mix the resin material and the insulating inorganic particles in advance at a temperature equal to or higher than a melting temperature of the resin material, and then cool the mixture to prepare a molten solidified body. The mixture and the molten solidified body are as described above. The mixing method is not particularly limited and any appropriate method can be adopted. The mixing temperature can also be appropriately set taking into consideration the melting temperature of the resin material, and the like.

### <Step of disposing mixture>

In the manufacturing method according to the embodiment of the present invention, the mixture is disposed at the end part of the battery element member produced or prepared as described above. Here, the mixture is disposed at a position and in an amount that coat the entire range of the end part (side surface) of the battery element member in a lamination direction in the heating and pressurizing step which will be described later. As described above, the end part at which the mixture is disposed does not need to be the entire peripheral side surface of the end part of the battery element member, and may be at least one end part of the battery element member. In addition, the mixture need only be disposed at the end part of the battery element member, and may be disposed on the outermost main surface side or on the main surface in a lamination direction, in addition to the end part. The disposition position of the mixture at the end part is usually outside with respect to the side surface of the battery element member and the mixture may be disposed at an interval from the end part (side surface) of the battery element member, but it is preferable to dispose the mixture in contact with the end part (side surface) from the viewpoint that the battery element member and the insulating coating body can be filled without any gaps. The amount of the mixture to be used is appropriately set taking into consideration the end part to be coated, the thickness of the insulating coating body, the pressing force in the heating and pressurizing step, and the like.

With regard to the end part where the tab is disposed, it is preferable that the disposition position of the mixture is such that the mixture is disposed in contact with the end part (side surface) of the active material layer of the tab of the electrode plate, from the viewpoint that the insulating coating body can be formed without any gaps at the end part (edge surface and recess) of the battery element member. In addition, it is preferable that the mixture is disposed between each of two tabs present at an interval in a lamination direction, from the viewpoint that the end part (edge surface and recess) of the battery element member can be coated with the insulating coating body substantially without gaps. The method of disposing the mixture as described above is not particularly limited. The mixture can be disposed after the production of the battery element member. However, as described above, a method in which a tape-shaped molded body or the like of the mixture is provided in advance on the main surface of the tab of the electrode plate to be used is preferable. Specifically, the mixture can be processed into a tape shape in advance, for example, by a hot roll press, to a layer thickness similar to that of the active material layer, and the tape-shaped molded body (molten solidified body) of the mixture can be welded to the main surface of the tab in a state of being adjacent to the active material layer by using a thermal iron or the like. By providing a tape-shaped molded body of the mixture in advance as described above, the end part of the positive electrode tab 5b, which has a narrow gap, particularly the recess 43B, can be reliably filled with the insulating coating body 44B.

As the method of disposing the mixture on the main surface of the tab, a method in which a tape-shaped molded body of the mixture is heated to a temperature equal to or higher than the melting temperature of the resin material contained in the mixture and then locally transferred and attached to a predetermined region of the tab is preferable from the viewpoint that the layer thickness and the width can be disposed with high accuracy. Furthermore, in this case, by coating the main surface of the tab with the mixture, damage to the tab and the positioning hole in a case where the temporary laminated electrode plate group is subjected to main positioning can be effectively suppressed. Furthermore, in a case of drilling the positioning hole, the occurrence of burrs on the inner periphery of the positioning hole is suppressed, the shape of the inner periphery of the positioning hole is stabilized, and the positioning accuracy of the main positioning is improved, which is suitable in a case where the positioning hole is provided. Examples of other methods include a method of locally disposing the mixture in a predetermined region of the tab with a hot melt dispenser. In this method, the mixture can be disposed in a predetermined region by a simple instrument.

It is preferable to dispose the mixture on the main surface of the substrate extending portion of the electrode plate also at the end part where the substrate extending portion is disposed, in the same manner as the end part where the tab is disposed. The disposition position and the disposition method of the mixture are the same as those at the end part where the tab is disposed.

In the present invention, a separate substrate extending portion may be provided in addition to the end part where the tab is disposed, and a tape-shaped molded body of the mixture may be provided in advance. For example, in a case where the electrode plate has a rectangular shape, as shown in Fig. 6A and Fig. 6B, it is preferable to provide a tape-shaped molded body of the mixture in advance at a tab provided at an edge of a short side of the electrode plate and a substrate extending portion provided at an edge of a short side facing the edge, and it is more preferable to provide a positioning hole at the tab or the substrate extending portion to improve the positioning accuracy of the battery element member. Here, as the method of improving the positioning accuracy of the battery element member, the above-mentioned preferred production method of a battery element member is preferable, and the above-mentioned preferred production method of a battery element member using the above-mentioned manufacturing device 70 is particularly preferable.

### <Pressurizing step>

In the manufacturing method according to the embodiment of the present invention, as described above, in a state where the mixture is disposed at the end part of the battery element member, the mixture is pressurized against the battery element member in an inward direction while being heated at a temperature at which the resin material in the mixture melts. By this step, as described above, the mixture melts and deforms to coat the end part of the battery element member in a state of being mixed with the insulating inorganic particles. At the same time, the molten mixture flows into any gaps of the battery element member and also flows into any recess to fill the recess in a case where the recess is provided. In addition, the molten resin material permeates into the constituent layers. Furthermore, it is preferable that the molten resin material intrudes into an interface between the constituent layers in a state of being mixed with the insulating inorganic particles. This is followed by cooling to solidify the resin material to form an insulating coating body consisting of a re-solidified mixture, thus making it possible to create a state of being coated substantially without gaps along the shape of the end part of the battery element member. In addition, a coating body intrusion region is preferably formed.

In a case where a mixture of a polymerizable compound and insulating inorganic particles is used as the mixture, the mixture deforms to coat the end part while undergoing a polymerization reaction to form a resin.

Taking into consideration the melting temperature of the resin material and the temperature at which the particulate shape of the insulating inorganic particles can be maintained, the heating temperature can be set to a temperature range equal to or higher than the melting temperature of the resin material, for example, a temperature range equal to or higher than the melting temperature of the resin material and equal to or lower than the thermal decomposition temperature of the resin material, and is preferably set to a temperature range equal to or higher than the melting temperature of the resin material and equal to or lower than the melting temperature + 150°C.

The pressurizing method may be any method that can fill the mixture along the shape of the end part of the battery element member substantially without gaps. Examples of the pressurizing method include a method of disposing a battery element member and a mixture on a hot plate and pressing the mixture with a pressing member while heating the mixture, and a method of heating and pressurizing a mixture using an isostatic pressing device such as a hot isostatic pressing device (HIP) or a warm isostatic pressing device (WIP). The above-mentioned method using a hot plate can be suitably applied in a case where the battery element member is pressurized in advance in a lamination direction and densified. On the other hand, in the above-mentioned method using an isostatic pressing device, the densification of the battery element member and the formation of the insulating coating body can be carried out at the same time, and the end part of the battery element member can be highly reinforced while maintaining the insulating properties thereof.

The pressurizing force in a case of pressurizing the mixture can be appropriately set in consideration of the heating temperature, the melt viscosity of the resin material, and the like, and the pressurizing force in the isostatic pressing device can be set to 10 to 1000 MPa and is preferably set to 20 to 600 MPa. In the present invention, from the viewpoint that the mixture can be filled without any gaps along the shape of the end part of the battery element member and the densification (improvement of battery performance) can be carried out, it is preferable that the mixture disposed at the end part of the battery element member is first pressurized at a pressure of 1 to 10 MPa, and then pressurized at that pressure using an isostatic pressing device or the like.

In a case where the mixture is pressurized, for example, in a case where a hot plate is used, it is preferable to pressurize the battery element member in a lamination direction from the viewpoint that the lamination misalignment of the electrode plate can be suppressed even in a case where the mixture is press-fitted against the battery element member in an inward direction. The pressurizing force at this time is preferably within a range in which the lamination misalignment of the electrode plate can be suppressed and the active material layer is not damaged, and can be usually set to 1 to 50 MPa.

In the manufacturing method according to the embodiment of the present invention, a method of heating and pressurizing using an isostatic pressing device can be carried out after the above-mentioned method using a hot plate. In particular, in a case where a positive electrode active material layer and a negative electrode active material layer having a dimensional difference are used, it is preferable that each battery element member is densified while forming the insulating coating body by a method of first pushing the mixture into the recess of the battery element member by the above-mentioned method using a hot plate and then heating and pressurizing the mixture using an isostatic pressing device. In this method, the heating temperature by the hot plate can be set to a temperature lower than the heating temperature by the isostatic pressing device. In a case where this heating and pressurizing step is carried out in two stages, the recess of the battery element member can be filled with the mixture substantially without gaps, the coating body intrusion region can be formed at the interface, and the end part of the battery element member can be highly reinforced while maintaining the insulating properties thereof. As a result, it is possible to densify the battery element member under a higher temperature and a higher pressure, thus making it possible to improve the battery performance.

In the manufacturing method according to the embodiment of the present invention, the step of disposing the mixture and the pressurizing step can be carried out using the battery element member taken out from the manufacturing device 70, or can be carried out while the battery element member is still accommodated in the frame 71 of the manufacturing device 70.

In a case where the manufacturing method according to the embodiment of the present invention is carried out using the above-mentioned manufacturing device 70, a step of disposing the mixture at the tab or the substrate extending portion in advance and pressurizing the end part provided with the tab or the substrate extending portion, and then a step of disposing the mixture at the end part not provided with the tab and the substrate extending portion and heating the mixture can be sequentially carried out to manufacture a laminated type all-solid state secondary battery. In this manufacturing method, the manufacturing device 70 has, in addition to the above-mentioned constituent members, an press-fitting plate 75 for press-fitting the mixture into an end part of the battery element member.

That is, before the battery element member produced in the accommodation space 71c of the frame 71 is taken out from the frame 71, the battery element member together with the frame 71 is heated to a temperature equal to or higher than the melting temperature of the resin material in the mixture, and the tape-shaped molded body of the mixture provided in advance on the electrode plate is melted to fix and fill both short sides of the battery element member with the mixture (molten mixture). For example, as shown in Fig. 9 and Fig. 10, the battery element member is heated by, for example, a hot plate in a state where the positioning jig 72 is inserted through the pressing restricting member 74. Then, since the battery element member is pressurized in a lamination direction by the pressing restricting member 74 and the restricting member 73, the tape-shaped molded body provided in the tab and the substrate extending portion does not deform or flow in a lamination direction, but deforms and flows balanced at least in an inward direction. In this manner, the tape-shaped molded body provided in the tab and the substrate extending portion can be filled substantially without gaps in a state of being in contact with the edge surface of the active material layer, and the coating body intrusion region can be formed at the interface.

Next, with respect to the long side of the battery element member, the side wall on the long side is removed in a state where the battery element member is pressed and restrained in an up-down direction, a rod-shaped or tape-shaped molded body of the mixture is disposed at the long side end part, and then the mixture is heated and melted to be press-fitted into the edge surface and the recess. For example, as shown in Fig. 11, in a state where the battery element member is pressurized in a lamination direction by the pressing restricting member 74 and the restricting member 73, the side wall 71b on the long side of the frame 71 is removed, and a mixture, for example, a tape-shaped molded body or a rod-shaped molded body 76 is disposed in the vicinity of the long side end part of the exposed battery element member. Thereafter, while maintaining this state, the press-fitting plate 75 disposed on the outside of the mixture is moved toward the long side end part while heating the frame 71 using a hot plate or the like, causing the mixture to deform and flow in an inward direction. In this manner, the long side end part of the battery element member can be filled with the mixture substantially without gaps, and the coating body intrusion region can be formed at the interface.

In a case of manufacturing a laminated type all-solid state secondary battery, before or after the above-mentioned heating and pressurizing step, as shown in Fig. 4, the negative electrode tabs of the negative electrode collector are connected to each other by welding or the like to provide a lead wire (see Fig. 5). In addition, the positive electrode tabs of the positive electrode collector are connected to each other by welding or the like to provide a lead wire.

Furthermore, a normal assembly step may be carried out, such as enclosing an all-solid state secondary battery with an end part coated with an insulating coating body in a housing.

In this manner, a single layer type all-solid state secondary battery and a laminated type all-solid state secondary battery each can be manufactured in which the end part of the battery element member is coated with the insulating coating body.

### Examples

Hereinafter, the present invention will be described in more detail based on Examples; however, the present invention is not limited thereto be interpreted. "Parts" and "%" that represent compositions in the following Examples are in terms of mass unless otherwise specified. In the present invention, "room temperature" means 25°C.

In Examples, unless otherwise specified, the operations were carried out in an argon atmosphere with a dew point of -60°C or lower or in a dry atmosphere.

### [Example A]

In Examples A-1 to A-6 and Comparative Examples A-1 to A-3, a laminated type all-solid state secondary battery including a positive electrode active material layer and a negative electrode active material layer having a dimensional difference was manufactured and evaluated.

Examples A-1 to A-6 and Comparative Examples A-1 to A-3 have basically the same configuration except for the contents shown in Table 1, and one of the differences is the presence or absence or the composition of an insulating coating body (mixture).

### <Production of negative electrode plate>

53% by mass of natural graphite, 45% by mass of an argyrodite sulfide solid electrolyte (Li₆PS₅Cl), 2% by mass of a rubber-based binder (expressed in terms of solid contents), and a tetralin-anisole mixed solvent were mixed to prepare a negative electrode mixture paste. Next, the obtained negative electrode mixture paste was applied onto both surfaces of a negative electrode collector made of stainless steel (SUS) and dried such that the film thickness after application and drying was 130 µm to produce a negative electrode plate having negative electrode active material layers on both surfaces.

The main surface size of the negative electrode active material layer was set to 2.5 cm × 2.5 cm.

In Examples A-1 to A-6 and Comparative Example A-3, it was confirmed that the particle diameter (D₉₀) of the natural graphite particles in the negative electrode active material layer was smaller than the particle diameter (D₉₀) of the alumina particles or PMMA particles in the mixture (molten solidified body) which will be described later.

### <Production of solid electrolyte sheet for transfer>

98% by mass of an argyrodite sulfide solid electrolyte (Li₆PS₅Cl), 2% by mass of a rubber-based binder (expressed in terms of solid contents), and a tetralin-anisole mixed solvent were mixed to prepare a solid electrolyte-containing paste. Next, the obtained solid electrolyte-containing paste was applied onto one surface of a stainless steel foil having a thickness of 10 µm and dried such that the film thickness after application and drying was 120 µm to produce a solid electrolyte sheet for transfer.

The main surface size of the solid electrolyte layer was set to 2.5 cm × 2.5 cm.

In Examples A-1 to A-6 and Comparative Example A-3, it was confirmed that the particle diameter (D₉₀) of the solid electrolyte particles in the solid electrolyte layer was smaller than the particle diameter (D₉₀) of the alumina particles or PMMA particles in the mixture (molten solidified body) which will be described later.

### <Production of solid electrolyte layer-laminated negative electrode plate>

After the solid electrolyte layer of the solid electrolyte sheet for transfer was superimposed on each of the negative electrode active material layers of the produced negative electrode plate, which was then subjected to a pressing treatment, the stainless steel foil was peeled off from the solid electrolyte layer to produce a solid electrolyte layer-laminated negative electrode plate (synonymous with a negative electrode with an electrolyte layer).

The basis weight (mass per unit area) of the negative electrode active material layer and the solid electrolyte layer was not changed (decreased) by the pressing treatment.

### <Production of positive electrode plate>

66% by mass of a positive electrode active material NCM523 (LiNi_{0.5}Co_{0.2}Mn_{0.3} particles with the surface coated with LiNbO₃), 30% by mass of an argyrodite sulfide solid electrolyte (Li₆PS₅Cl), 3% by mass of VGCF (carbon fiber manufactured by Showa Denko K.K.) as a conductive auxiliary agent, 1% by mass in total of a rubber-based binder and a cellulose-based binder (expressed in terms of solid contents), and a tetralin-anisole mixed solvent were mixed to prepare a positive electrode mixture paste. Next, the obtained positive electrode mixture paste was applied onto both surfaces of a positive electrode collector made of aluminum (Al) and dried such that the film thickness after application and drying was 90 µm to produce a positive electrode plate having a positive electrode active material layers on both surfaces.

The main surface size of the positive electrode active material layer was set to 2.0 cm × 2.0 cm.

In Examples A-1 to A-6 and Comparative Example A-3, it was confirmed that the particle diameter (D₉₀) of the NCM523 particles in the positive electrode active material layer was smaller than the particle diameter (D₉₀) of the alumina particles or PMMA particles in the mixture (molten solidified body) which will be described later.

### <Production of battery element member>

Six of the produced solid electrolyte layer-laminated negative electrode plates and five of the produced positive electrode plates were alternately laminated in order from the negative electrode plate to produce a battery element member including ten battery units.

It is noted that a negative electrode tab was provided on one side of four sides of each negative electrode plate (each negative electrode collector), a positive electrode tab was provided on one side of four sides of each positive electrode plate (each positive electrode collector), an insulating coating body was formed at an end part of the battery element member, and then the same electrode tabs were welded to each other. The solid electrolyte layer-laminated negative electrode plate and the positive electrode plate were laminated so that the negative electrode tab and the positive electrode tab were oriented in opposite directions.

As shown in Fig. 3, in the produced battery element member, a recess 43 is formed adjacent to the outer side of the positive electrode active material layer in a plane direction, by a side surface of a positive electrode plate and two solid electrolyte layers that sandwich the positive electrode plate. On the side where the positive electrode tab is provided (the end part of the battery element member), a recess 43B is formed by the positive electrode tab, the side surface of the positive electrode active material layer, and the solid electrolyte layer as shown in Fig. 4. On the side where the negative electrode tab is provided (end part of the battery element member), a recess 43C is formed by a side surface of the positive electrode plate and two solid electrolyte layers interposing the positive electrode plate as shown in Fig. 5.

### <Preparation of mixture (molten solidified body)>

Polyethylene vinyl acetate (EVA, manufactured by Robert Bosch GmbH) and alumina particles (D₉₀ diameter of 50 µm according to the above method) were put into a glass bottle which was then placed on a hot plate, heated to 140°C, and melt-kneaded with a silicone spatula, and then cooled to room temperature to prepare each of molten solidified bodies A1 to A4. The mixing ratio (content) of EVA and alumina particles was set to the value shown in the column of "Mass ratio (resin material/insulating inorganic particles)" in Table 1.

In addition, a polypropylene resin (PP) or a mixed resin of a polyethylene resin (PE) and EVA (manufactured by Robert Bosch GmbH) (hereinafter, referred to as a "PE/EVA mixed resin") having a mass ratio of 4:1, and alumina particles (D₉₀ diameter of 50 µm according to the above method) were put into a glass bottle which was then placed on a hot plate, heated to 210°C (PP) or 175°C (PE/EVA mixed resin), melt-kneaded with a silicone spatula, and then cooled to room temperature to prepare each of molten solidified bodies A5 and A6. The mixing ratio (content) of the PP or PE/EVA mixed resin and the alumina particles was set to the value shown in the column of "Mass ratio (resin material/insulating inorganic particles)" in Table 1.

In addition, EVA (manufactured by Robert Bosch GmbH) and particles of polymethyl methacrylate (referred to as PMMA particles, D₉₀ diameter of 53 µm according to the above method, manufactured by Corefront Corporation) were put into a glass bottle which was then placed on a hot plate, heated to 140°C, melt-kneaded with a silicone spatula, and then cooled to room temperature to prepare a molten solidified body A7. The mixing ratio (content) of EVA and PMMA particles was set to the value shown in the column of "Mass ratio (resin material/insulating inorganic particles)" in Table 1.

The softening points and the complex viscosities of the EVA, PP, and PE/EVA mixed resin, as well as the alumina particles were confirmed according to the above-mentioned shear test. As a result, the EVA had a softening point of 80°C to 90°C and a complex viscosity of 30 Pa·s at 190°C. The PP had a softening point of 160°C and a complex viscosity of 1000 Pa·s at 190°C. The PE/EVA mixed resin had a softening point of 130°C and a complex viscosity of 1000 Pa·s at 190°C. In addition, it was confirmed that the alumina particles did not have a softening point in a temperature range of up to 350°C and did not melt at 350°C and 250°C. The PPMA particles had a softening point of 100°C to 110°C.

The vinyl acetate content, complex viscosity at 190°C, and weight-average molecular weight of the EVA were within the above-mentioned ranges. In addition, the weight-average molecular weights of the PP and PE/EVA mixed resin were also within the above-mentioned range.

### <Manufacturing of laminated type all-solid state secondary battery>

A heat-resistant film (made of polyphenylene sulfide (PPS)) with each side 1 cm larger than the size (2.5 cm × 2.5 cm) of the battery element member was disposed on the lower portion and the upper portion of the produced battery element member, and a molten solidified body (amount capable of entirely coating the end part and the peripheral side surface: 2 g) was disposed in the vicinity of the end part of the battery element member (over the entire periphery) between both films disposed on the upper portion and the lower portion of the battery element member. The compositions of the molten solidified bodies A1 to A7 used in Examples A-1 to A-6 and Comparative Example A-3 are as shown in the column of "Insulating coating body (molten solidified body)" in Table 1. In Comparative Example A-1, no molten solidified body was disposed, and in Comparative Example A-2, only the EVA resin was disposed instead of the molten solidified body.

Next, the molten solidified body was melted on a hot plate set at the temperature described below while maintaining this state, and the molten material was pressed from above in a state of being confined between both films, causing the molten material to flow toward the end part (inner side) and into the recess of the battery element member. This was followed by cooling. The thus obtained battery element member (temporary laminated battery) in which the insulating coating body was allowed to flow into the recess was wrapped with a laminated film, and further subjected to warm isostatic pressing for 1 minute under conditions of a temperature of 190°C and a pressure of 588 MPa to fill the recess of the battery element member with the insulating coating body to form an insulating coating body at the end part of the battery element member and to densify each battery element member.

Here, the melting temperature of the molten solidified body (the set temperature of the hot plate) was set to the melting point of the resin material used + 50°C, and specifically, it was set to 140°C in Examples A-1 to A-4 and Comparative Examples A-1 to A-3, set to 210°C in Example A-5, and set to 180°C in Example A-6.

In this manner, a laminated type all-solid state secondary battery of each of Examples and Comparative Examples was manufactured.

### [Evaluation 1: Confirmation of state of end part of solid electrolyte layer]

For each of the manufactured laminated type all-solid state secondary batteries, any five locations in the vicinity of the interface between the positive electrode active material layer and the solid electrolyte layer in the cross section of the end part of the battery element member that was revealed by cutting and cross section processing with a cross section polisher were observed at a magnification of 200 times using a scanning electron microscope (model number: Hitachi tabletop SEM TM4000Plus, manufactured by Hitachi High-Tech Corporation). In the obtained SEM micrograph, the state of the end part of the solid electrolyte layer (the presence or absence of deformation and the presence or absence of the occurrence of defects) was visually confirmed. The results are shown in the column of "State of end part of SE layer" in Table 1.

In a case where no deformation or defects occurred at the end part of the solid electrolyte layer at any of the observed locations, it was rated as "O" (passed). On the other hand, in a case where deformation or defects occurred at the end part of the solid electrolyte layer at even one location, it was rated as "×" (failure), and the state (occurrence of breakage, crack, and the like) was also described.

### [Evaluation 2: Confirmation of presence or absence of coating body intrusion region]

In the SEM micrograph obtained in the evaluation 1, it was determined whether or not the coating body intrusion region was present at the interface between the positive electrode active material layer and the solid electrolyte layer, and in a case where the coating body intrusion region was present, the number of insulating inorganic particles contained in the coating body intrusion region was counted to obtain an average value. In a case where the coating body intrusion region was present at even one location in the interface between the positive electrode active material layer and the solid electrolyte layer, this was described as "Present" in the column of "Presence or absence of coating body intrusion region" in Table 1, and the average value of the number of the insulating inorganic particles was shown in the column of "Number of insulating inorganic particles in coating body intrusion region" in Table 1. On the other hand, in a case where there was no coating body intrusion region at any location in the interface between the positive electrode active material layer and the solid electrolyte layer, this was described as "Absent" in the column of "Presence or absence of coating body intrusion region" in Table 1.

The intrusion amount and the average thickness of the coating body intrusion region were measured from the SEM micrograph, and the obtained average values are shown in Table 1.

### [Evaluation 3: Confirmation of occurrence of short circuit]

Using a charging and discharging evaluation device TOSCAT (trade name, manufactured by Toyo System Co., Ltd.), the manufactured laminated type all-solid state secondary battery was subjected to three cycles of charging and discharging cycles, each consisting of constant current/constant voltage charging (CCCV) at 25°C at 1.3 mA up to 4.35 V and discharging at 1.3 mA down to 3.0 V as one cycle. At this time, a charging curve was obtained with the horizontal axis representing a charging capacity (current × time) and the vertical axis representing a charging voltage.

In the evaluation, in the three charging and discharging cycles, in a case where the charging voltage reached 4.35 V in all three charging and discharging cycles, it was determined that no short circuit had occurred and was rated as "O" (passed). On the other hand, in the three charging and discharging cycles, in a case where the charging voltage did not reach 4.35 V even once and charging was not possible (it was determined that a short circuit had occurred), it was rated as "×" (failure). The results are shown in the column of "Confirmation of occurrence of short circuit" in Table 1.

### [Evaluation 4: Ratio of discharge capacity]

In the above section of [Evaluation 3: Confirmation of occurrence of short circuit], the ratio of the discharge capacity at the third cycle in Examples A-1 to A-6 was calculated based on the discharge capacity at the third cycle in Example A-4. The results are shown in the column of "Discharge capacity (relative ratio)" in Table 1. In Comparative Examples A-1 to A-3, a short circuit occurred, so the ratio of the discharge capacity was not evaluated (shown as "-" in the column of "Discharge capacity (relative ratio)" in Table 1).

In Table 1 and Table 2 below, "SE" means solid electrolyte layer. In addition, in the column of "Positive electrode", in a case where a positive electrode active material layer is formed on the surface of the collector, an aspect in which a positive electrode active material layer is provided on both main surfaces of the collector is described as "Both surfaces", and an aspect in which a positive electrode active material layer is provided on one surface (one main surface) of the collector is described as "One surface". Similarly, in the column of "SE negative electrode", in a case where a negative electrode active material layer is formed on the surface of the collector and a solid electrolyte layer is transferred to the surface, an aspect in which a negative electrode active material layer and a solid electrolyte layer are provided on both main surfaces of the collector is described as "Both surfaces", and an aspect in which a negative electrode active material layer and a solid electrolyte layer are provided on one surface of the collector is described as "One surface". Furthermore, the "Bonding interface" refers to an interface that is not pressurized and bonded in advance before the production of the battery element member and is pressurized and bonded by warm isostatic pressing during the production of the battery element member. As described above, this interface is an interface into which the mixture easily intrudes and the coating body intrusion region is easily formed. In fact, in Examples A-1 to A-6, the coating body intrusion region was formed at one or more interfaces.

**[Table 1]**

| | Examples | | | | | | Comparative Examples | | |
|---|---|---|---|---|---|---|---|---|---|
| | A-1 | A-2 | A-3 | A-4 | A-5 | A-6 | A-1 | A-2 | A-3 |
| Positive electrode | Both surfaces | Both surfaces | Both surfaces | Both surfaces | Both surfaces | Both surfaces | Both surfaces | Both surfaces | Both surfaces |
| SE negative electrode | Both surfaces | Both surfaces | Both surfaces | Both surfaces | Both surfaces | Both surfaces | Both surfaces | Both surfaces | Both surfaces |
| Bonding interface | Positive electrode/SE | Positive electrode/SE | Positive electrode/SE | Positive electrode/SE | Positive electrod e/SE | Positive electrode/SE | Positive electrode/SE | Positive electrode/SE | Positive electrode/SE |
| Number of laminated units | 10 | 10 | 10 | 10 | 10 | 10 | 10 | 10 | 10 |
| Insulaling coating body (molten solidified body) | Present | Present | Present | Present | Present | Present | Absent | Present | Present |
| | A1 | A2 | A3 | A4 | A5 | A6 | - | - | A7 |
| Resin material | EVA resin | EVAresin | EVA resin | EVA resin | PP resin | PE/ EVA resin | Absent | EVA resin | EVA resin |
| Insulating inorganic particles (D₉₀) | Alumina 50 µm | Alumina 50 µm | Alumina 50 µm | Alumina 50 µm | Alumina 50 µm | Alumina 50 µm | Absent | Absent | PMMA particles 53 µm |
| Mass ratio (resin material/insulating inorganic particles) | 24/76 | 20/80 | 16/84 | 10/90 | 24/76 | 24/76 | - | - | 50/50 |
| Warm isostatic pressing conditions | 190°C 588 MPa | 190°C 588 MPa | 190°C 588 MPa | 190°C 588 MPa | 190°C 588 MPa | 190°C 588 MPa | 190°C 588 MPa | 190°C 588 MPa | 190°C 588 MPa |
| State of end part of SE layer | ○ | ○ | ○ | ○ | ○ | ○ | × Breakage | × Breakage | × Breakage |
| Presence or absence of coating body intrusion region | Present | Present | Present | Present | Present | Present | Absent | Absent | Absent |
| Number of insulating inorganic particles in coating body intrusion region | 4 particles | 3 particles | 2 particles | 1 particle | 1 particle | 1 particle | - | - | - |
| Intrusion amount of coating body intrusion region | 0.05 mm | 0.04 mm | 0.03 mm | 0.02 mm | 0.02 mm | 0.02 mm | - | - | - |
| Average thickness of coating body intrusion region | 25 µm | 25 µm | 25 µm | 25 µm | 25 µm | 25 µm | - | - | - |
| Confirmation of occurrence of short circuit | ○ | ○ | ○ | ○ | ○ | ○ | × | × | × |
| Discharge capacity (relative ratio) | 97 | 98 | 99 | 100 | 90 | 100 | - | - | - |

### [Example B]

In Example B-1 and Comparative Example B-1, a single layer type all-solid state secondary battery including a positive electrode active material layer, a solid electrolyte layer, and a negative electrode active material layer having the same dimensions (the same surface area of the main surface) was manufactured and evaluated. Example B-1 and Comparative Example B-1 have basically the same configuration except for the contents shown in Table 2, and one of the differences is the presence or absence of an insulating coating body (mixture).

A single layer type all-solid state secondary battery consisting of a battery element member including one battery unit having the layer configuration shown in Fig. 1 was manufactured as follows.

Specifically, in the same manner as in Example A, an active material layer was provided on one main surface of a collector to produce each of a negative electrode plate and a positive electrode plate. The solid electrolyte sheet for transfer produced in Example A was superimposed and pressed on the negative electrode active material layer of the negative electrode plate, thereby transferring the solid electrolyte layer onto the negative electrode active material layer to produce a solid electrolyte layer-laminated negative electrode plate. The positive electrode active material layer of the positive electrode plate was superposed on the solid electrolyte layer of the solid electrolyte layer-laminated negative electrode plate to produce a battery element member including one battery unit.

### (Example B-1)

Next, in the same manner as in Example A-1, a molten solidified body (amount capable of entirely coating the end part and the peripheral side surface: 1 g) A1 was formed into a sheet shape (thickness: 250 µm) in advance by a hot roll press in the vicinity of the end part of the battery element member. An opening of 2.5 cm × 2.5 cm was opened in this sheet, and the battery element member was disposed by being fitted into the opening and then subjected to warm isostatic pressing to form an insulating coating body at an end part of the battery element member, thereby manufacturing a single layer type all-solid state secondary battery of Example B-1.

### (Comparative Example B-1)

A battery element member including the one battery unit produced as described above was used as an all-solid state secondary battery of Comparative Example B-1.

In the obtained single layer type all-solid state secondary battery of Example B-1, the coating amount L of the insulating coating body on the main surface of the negative electrode collector in the vicinity of the edge was 0.1 mm.

For each of the manufactured single layer type all-solid state secondary batteries, [Evaluation 1] to [Evaluation 3] were carried out in the same manner as in Example A-1. In this regard, the number of observed locations in [Evaluation 1] and [Evaluation 2] was one. The coating body intrusion region was formed in the "bonding interface" of Example B-1.

The layer thicknesses of the positive electrode active material layer and the negative electrode active material layer in each single layer type all-solid state secondary battery were both 60 µm or more.

**[Table 2]**

| | Example B-1 | Comparative Example B-1 |
|---|---|---|
| Positive electrode | One surface | One surface |
| SE negative electrode | One surface | One surface |
| Bonding interface | Positive electrode/SE | Positive electrode/SE |
| Number of laminated units | 1 | 1 |
| Insulating coating body | Present | Absent |
| Resin material | EVA resin | Absent |
| Insulating inorganic particles (D₉₀) | Alumina 50 µm | Absent |
| Mass ratio (resin material/insulating inorganic particles) | 24/76 | - |
| Warm isostatic pressing conditions | 190°C | 190°C |
| | 588 MPa | 588 MPa |
| State of end part of SE layer | ○ | × Crack |
| Presence or absence of coating body intrusion region | Present | Absent |
| Number of insulating inorganic particles in coating body intrusion region | 39 particles | - |
| Intrusion amount of coating body intrusion region | 0.5 mm | - |
| Average thickness of coating body intrusion region | 25 µm | - |
| Confirmation of occurrence of short circuit | ○ | × |

### [Example C]

In Examples C-1 to C-6 and Comparative Examples C-1 to C-3, a laminated type all-solid state secondary battery including a positive electrode active material layer and a negative electrode active material layer having a dimensional difference was manufactured using a collector in which a tab was set to be long, and the evaluation was carried out for the battery. In Examples C-1 to C-6 and Comparative Example C-3, the molten solidified bodies A1 to A7 having the same compositions as those in Examples A-1 to A-6 and Comparative Example A-3 were used, respectively. In Comparative Example C-1, no molten solidified body was disposed, and in Comparative Example C-2, only the EVA resin was disposed instead of the molten solidified body.

### <Production of negative electrode plate>

A negative electrode plate was produced in the same manner as in the production of the negative electrode plate of Example A-1, except that, in the production of the negative electrode plate of Example A-1, the negative electrode collector was changed to a negative electrode collector with a tab described below. That is, a negative electrode tab having a width of 2.5 cm and a length of 5.5 cm was formed on one side of four sides of the negative electrode collecting portion having a size of 2.5 cm × 2.5 cm to produce a negative electrode collector with a tab.

Next, in the same manner as in the production of the negative electrode plate of Example A-1, a negative electrode active material layer and a solid electrolyte layer were formed on the negative electrode collecting portion of the negative electrode collector with a tab, and then a molten solidified body having a width of 2.5 cm, a length of 3 mm, and a height of 0.3 mm was attached only to one side of the main surface of the negative electrode tab at a position 1 mm away from the negative electrode active material layer using a hot melter (nozzle diameter: 1 mm). In this manner, a solid electrolyte layer-laminated negative electrode plate was produced. In each of Examples and Comparative Examples, the composition of the molten solidified body provided in the negative electrode tab is the same as the composition of the molten solidified body disposed in the vicinity of the edge surface where the tab is not provided, which will be described later, and is specifically as shown in Table 1. For example, in Example C-1, the molten solidified body attached to the negative electrode tab and the molten solidified body disposed in the vicinity of the edge surface where the tab and the substrate extending portion are not provided are both the same as the molten solidified body A1 used in Example A-1.

### <Production of positive electrode plate>

A positive electrode plate was produced in the same manner as in the production of the positive electrode plate of Example A-1, except that, in the production of the positive electrode plate of Example A-1, the positive electrode collector was changed to a positive electrode collector with a tab described below. That is, a positive electrode tab having a width of 2.0 cm and a length of 6.0 cm was formed on one side of four sides of the positive electrode collecting portion having a size of 2.0 cm × 2.0 cm to produce a positive electrode collector with a tab.

Next, in the same manner as in the production of the positive electrode plate of Example A-1, a positive electrode active material layer was formed on the positive electrode collecting portion of the positive electrode collector with a tab, and then a molten solidified body having a width of 2.0 cm, a length of 3 mm, and a height of 0.3 mm was attached only to one side of the main surface of the positive electrode tab at a position 3.5 mm away from the positive electrode active material using a hot melter (nozzle diameter: 1 mm). In this manner, a positive electrode plate was produced. In each of Examples and Comparative Examples, the composition of the molten solidified body provided in the positive electrode tab is the same as the composition of the molten solidified body disposed in the vicinity of the edge surface where the tab is not provided, which will be described later, and is specifically as shown in Table 1.

### <Production of battery element member>

Using the produced solid electrolyte layer-laminated negative electrode plate and the positive electrode plate, a battery element member including 10 battery units was produced by alternately laminating the solid electrolyte layer-laminated negative electrode plate and the positive electrode plate in the order starting from the negative electrode plate, in the same manner as in Example A-1.

A heat-resistant film (made of PPS) with each side 1 cm larger than the size (2.5 cm × 2.5 cm) of the collecting portion was disposed on the lower portion and the upper portion of the produced battery element member, and the molten solidified body (amount capable of entirely coating the side surface: 1 g) prepared in Example A-1 was disposed in the vicinity of the end part of the collecting portion (only the side surface on which the tab was not provided) between both films disposed on the upper portion and the lower portion of the collecting portion. Here, the tab is exposed from the heat-resistant film.

Next, the molten solidified body was melted on a hot plate while maintaining this state, and the molten material was pressed from above in a state of being confined between both films and each tab, causing the molten material to flow toward the end part (inner side) and into the recess of the battery element member. This was followed by cooling. The thus obtained battery element member (temporary laminated battery) in which the insulating coating body was allowed to flow into the recess was wrapped with a laminated film, and further subjected to warm isostatic pressing for 1 minute under conditions of a temperature of 190°C and a pressure of 588 MPa to fill the recess of the battery element member with the insulating coating body to form an insulating coating body at the end part of the battery element member and to densify each battery element member. The installation temperatures of the hot plate in Examples C-1 to C-6 and Comparative Examples C-1 to C-3 were set to the same temperatures as the set temperatures in Examples A-1 to A-6 and Comparative Examples A-1 to A-3, respectively.

In this manner, each of the laminated type all-solid state secondary batteries of Examples C-1 to C-6 and Comparative Examples C-1 to C-3 was manufactured.

In a case where each of the laminated type all-solid state secondary batteries of Examples C-1 to C-6 and Comparative Examples C-1 to C-3 was subjected to the above-mentioned [Evaluation 1] to [Evaluation 4] in the same manner as in Example A-1, the same results as the results (Table 1) of the corresponding laminated type all-solid state secondary batteries of Examples A-1 to A-6 and Comparative Examples A-1 to A-3 were obtained. Therefore, the description of the evaluation results of Example C and Comparative Example C will be omitted.

### [Example D]

### <Examples D-1 to D-6 and Comparative Examples D-1 to D-3>

In Examples D-1 to D-6 and Comparative Examples D-1 to D-3, a laminated type all-solid state secondary battery was manufactured using the battery element member that was produced by positioning the electrode plates by the preferred production method of a battery element member using the manufacturing device 70, using a collector having a tab with a positioning hole drilled therein and a substrate extending portion, and the battery was evaluated. In Examples D-1 to D-6 and Comparative Example D-3, the molten solidified bodies A1 to A7 having the same compositions as those in Examples A-1 to A-6 and Comparative Example A-3 were used, respectively. In Comparative Example D-1, no molten solidified body was disposed, and in Comparative Example D-2, only the EVA resin was disposed instead of the molten solidified body.

The manufacturing device 70 shown in Fig. 7 to Fig. 11 was prepared.

### <Production of frame>

The frame 71 having the following dimensions and shown in Fig. 7 and Fig. 8 was produced using metal aluminum. Six holes 71d (corresponding to pin receiving portions 73a) penetrating in a thickness direction were drilled at positions of the bottom portion 71a (also serving as the restricting member 73) corresponding to the positioning pins 72a of the positioning jig 72. The inner diameter of the hole 71d with respect to the positioning pin 72a having a diameter of 3.0 mm, which was drilled in the tab, was set to 3.1 mm, and the inner diameter of the hole 71d with respect to the positioning pin 72a having a diameter of 4.0 mm, which was drilled in the substrate extending portion, was set to 4.1 mm.
Inner dimensions of the accommodation space 71c: Long side (longitudinal) 151.0 mm, short side (lateral) 43.0 mm

### <Production of positioning jig>

The positioning jig 72 having the following dimensions and shown in Fig. 9 was produced using metal aluminum.

One positioning pin 72a having a diameter of 3.0 mm was erected at a position corresponding to the positioning hole provided in the tab, on each of both short sides of a base which was set to appropriate dimensions. In addition, two positioning pins 72a each having a diameter of 4.0 mm were erected at an interval of 30 mm along the short side at positions corresponding to the positioning holes provided in the substrate extending portion. In this manner, a total of six positioning pins 72a were erected on the base.

### <Production of correction member>

As shown in Fig. 9, the plate-shaped correction member 74 having the same inner dimensions as the accommodation space 71c was produced using metal aluminum and attached to a main surface of a lid body set to appropriate dimensions. The plate thickness of the correction member 74 was set to a thickness at which the battery element member in the accommodation space 71c can be pressurized together with the bottom portion 71a (restricting member 73) (a thickness in which the interval between the correction member 74 and the bottom portion 71a is smaller than the thickness of the battery element member). The correction member 74 and the lid body were provided with positioning holes at the same positions as the base of the positioning jig 72.

Next, a negative electrode plate with an electrolyte layer and a positive electrode plate were produced.

### (Production of negative electrode plate)

53 parts by mass of natural graphite, 45 parts by mass of an argyrodite sulfide solid electrolyte (Li₆PS₅Cl), 2 parts by mass of a rubber-based binder (expressed in terms of solid contents), and a tetralin-anisole mixed solvent were mixed to prepare a negative electrode mixture paste.

The negative electrode composite paste was applied to each of both surfaces of a stainless steel foil having a width of 180 mm, a length of 200 mm, and a thickness of 10 µm (hereinafter, simply referred to as a stainless steel foil) in a width of 129 mm at the center in a width direction and dried so that the film thickness after application and drying was 130 µm, thereby producing an original sheet of a negative electrode plate having an uncoated portion of 25.5 mm at each of the end parts of the negative electrode active material layer.

The obtained original sheet of a negative electrode plate was roughly cut into a width of 44 mm to produce a roughly cut negative electrode plate with a long side of 180 mm and a short side of 44 mm, and having a negative electrode active material layer and an uncoated portion of 25.5 mm at each of the end parts of the negative electrode active material layer.

### (Installation of tape-shaped molded body of mixture)

A tape-shaped molded body le, which was obtained by processing the molten solidified body prepared in Example A-1 into a tape shape (a thickness of 1 to 10 µm thicker than the negative electrode active material layer 2B after densification) in advance by a hot roll press, was attached by a hot iron to both main surfaces of the negative electrode tab 1b up to a length of 5.5 mm from the end part of the negative electrode active material layer 2B in the roughly cut negative electrode plate. Similarly, the tape-shaped molded body 1e was attached to both main surfaces of the substrate extending portion 1c facing the negative electrode tab 1b up to a length of 10.5 mm from the end part of the negative electrode active material layer 2B. After cooling, the negative electrode collector 1C including the positioning hole 1d and having the following dimensions was produced using a punching blade in a state where the tape-shaped molded body 1e and the negative electrode collector were attached to each other.

### (Dimensions of negative electrode collector)

Dimensions of negative electrode collecting portion (negative electrode active material layer forming region) 1a: long side 129.0 mm, short side 42.0 mm
Outer dimensions of negative electrode collector 1C including substrate extending portion 1c and negative electrode tab 1b: long side 150.0 mm, short side 42.0 mm
Length of substrate extending portion 1c and negative electrode tab 1b in long side direction: 10.0 mm
Width of substrate extending portion 1c and negative electrode tab 1b in short side direction: 10.0 mm
Length of welded portion of negative electrode tab 1b: 5.0 mm
Inner diameter of positioning hole 1d drilled in substrate extending portion 1c: 4.1 mm
Interval in short side direction of positioning holes 1d drilled in substrate extending portion 1c: 30 mm
Inner diameter of positioning hole 1d drilled on negative electrode active material layer side of negative electrode tab 1b: 3.1 mm

### (Production of solid electrolyte layer)

98 parts by mass of an argyrodite sulfide solid electrolyte (Li₆PS₅Cl), 2 parts by mass of a rubber-based binder (expressed in terms of solid contents), and a tetralin-anisole mixed solvent were mixed to prepare a solid electrolyte-containing paste. Next, the obtained solid electrolyte-containing paste was applied onto one surface of a stainless steel foil having a thickness of 10 µm and dried so that the film thickness after application and drying was 120 µm. In this manner, two laminates each consisting of the above-mentioned negative electrode active material layer, a solid electrolyte layer and a stainless steel foil, each having the same long and short side dimensions, were produced.

### (Production of negative electrode plate 9 with electrolyte layer)

The solid electrolyte layer of each laminate was superimposed on each negative electrode active material layer of the produced negative electrode plate, followed by a pressing treatment (densification), and then the stainless steel foil was peeled off from the solid electrolyte layer. In this manner, the negative electrode plate 9 with an electrolyte layer was produced. The basis weight (mass per unit area) of the negative electrode active material layer and the solid electrolyte layer was not changed (decreased) by the pressing treatment.

In each of Examples and Comparative Examples, the composition of the tape-shaped molded body (molten solidified body) 1e provided on the negative electrode tab 1b and the substrate extending portion 1c is the same as the composition of the rod-shaped molded body (molten solidified body) 76 disposed on the edge surface on which the negative electrode tab 1b or the substrate extending portion 1c is not provided, which will be described later, and is specifically as shown in Table 1. For example, in Example D-1, both the tape-shaped molded body 1e attached to the negative electrode tab 1b and the substrate extending portion 1c and the rod-shaped molded body 76 disposed in the vicinity of the edge surface where the negative electrode tab 1b and the substrate extending portion 1c are not provided are the same as the molten solidified body A1 used in Example A-1.

In this manner, a negative electrode plate 9 with an electrolyte layer was produced in which the tape-shaped molded body 1e was attached in advance to the negative electrode tab 1b and the substrate extending portion 1c.

### <Production of positive electrode plate>

66 parts by mass of a positive electrode active material NCM523 (LiNi_{0.5}Co_{0.2}Mn_{0.3} particles with the surface coated with LiNbO₃), 30 parts by mass of an argyrodite sulfide solid electrolyte (Li₆PS₅Cl), 3 parts by mass of VGCF (carbon fiber manufactured by Showa Denko K.K.) as a conductive auxiliary agent, 1 part by mass of a rubber-based binder (expressed in terms of solid contents), and a tetralin-anisole mixed solvent were mixed to prepare a positive electrode mixture paste.

The positive electrode composite paste was applied to each of both surfaces of an aluminum foil having a width of 180 mm, a length of 200 mm, and a thickness of 20 µm (hereinafter, simply referred to as an aluminum foil) in a width of 125 mm at the center in a width direction and dried so that the film thickness after application and drying was 90 µm, thereby producing an original sheet of a positive electrode plate having an uncoated portion of 27.5 mm at each of the end parts of the positive electrode active material layer.

The obtained original sheet of a positive electrode plate was roughly cut into a width of 44 mm to prepare a roughly cut positive electrode plate with a long side of 180 mm and a short side of 44 mm, and having a positive electrode active material layer and an uncoated portion of 27.5 mm at each of the end parts of the positive electrode active material layer.

### (Installation of tape-shaped molded body of mixture)

A tape-shaped molded body 5e, which was obtained by processing the molten solidified body prepared in Example A-1 into a tape shape (a thickness of 1 to 10 µm thicker than the positive electrode active material layer 4B after densification) in advance by a hot roll press, was attached by a hot iron to both main surfaces of the positive electrode tab 5b up to a length of 7.5 mm from the end part of the positive electrode active material layer 4B in the roughly cut positive electrode plate. Similarly, the tape-shaped molded body 5e was attached to both main surfaces of the substrate extending portion 5c facing the positive electrode tab 5b up to a length of 12.5 mm from the end part of the positive electrode active material layer 4B. After cooling, the positive electrode collector including the positioning hole 1d and having the following dimensions was produced using a punching blade in a state where the tape-shaped molded body 5e and the positive electrode collector were attached to each other.

### (Dimensions of positive electrode collector)

Dimensions of positive electrode collecting portion (positive electrode active material layer forming region) 5a: long side 125.0 mm, short side 40.0 mm
Outer dimensions of positive electrode collector 5C including substrate extending portion 5c and positive electrode tab 5b: long side 150.0 mm, short side 40.0 mm
Length of substrate extending portion 5c and positive electrode tab 5b in long side direction: 10.0 mm
Width of substrate extending portion 5c and positive electrode tab 5b in short side direction: 10.0 mm
Length of welded portion of positive electrode tab 5b: 5.0 mm
Inner diameter of positioning hole 5d drilled in substrate extending portion 5c: 4.1 mm
Interval in short side direction of positioning holes 5d drilled in substrate extending portion 5c: 30 mm
Inner diameter of positioning hole 5d drilled on positive electrode active material layer side of positive electrode tab 5b: 3.1 mm

In each of Examples and Comparative Examples, the composition of the tape-shaped molded body (molten solidified body) 5e provided on the positive electrode tab 5b and the substrate extending portion 5c is the same as the composition of the rod-shaped molded body (mixture) 76 disposed on the edge surface on which the positive electrode tab 5b or the substrate extending portion 5c is not provided, which will be described later, and is specifically as shown in Table 1. For example, in Example D-1, both the tape-shaped molded body 5e attached to the positive electrode tab 5b and the substrate extending portion 5c and the rod-shaped molded body 76 disposed in the vicinity of the edge surface where the positive electrode tab 5b and the substrate extending portion 5c are not provided are the same as the molten solidified body A1 used in Example A-1.

In this manner, a positive electrode plate 8 was produced in which the tape-shaped molded body 5e was attached in advance to the positive electrode tab 5b and the substrate extending portion 5c.

### <Production of battery element member>

As shown in Fig. 7 and Fig. 8, six negative electrode plates 9 with an electrolyte layer and five positive electrode plates 8 were manually placed one by one in the accommodation space 71c of the frame 71 in this order in an alternating manner, so that electrode plates corresponding to ten battery units were laminated and accommodated. As a result, the electrode plates 8 and 9 were temporarily positioned by the accommodation space 71c, and communication holes H appeared in which the positioning holes drilled in each tab of the electrode plates 8 and 9 communicated with each other in a lamination direction and communication holes H appeared in which the positioning holes drilled in each substrate extending portion 8B communicated with each other in a lamination direction. In this manner, a temporary laminated electrode plate group was obtained.

Next, the positioning jig 72 was disposed above the frame 71 that accommodated the obtained temporary laminated electrode plate group, with a lid body provided with the pressing restricting member 74 sandwiched therebetween. At this time, the temporary laminated electrode plate group in the accommodation space 71c, particularly the tab and the substrate extending portion are restricted from the variation in a vertical direction by the restricting member 73 (the bottom portion 71a of the frame 71). In this state, as shown in Fig. 8A, the positioning jig 72 was manually moved downward toward the restricting member 73 at a speed of about 3 cm/min, the six positioning pins 72a were inserted into the corresponding communication holes H, and finally, as shown in Fig. 8B, the positioning jig 72 was advanced to the pin receiving portion 73a of the restricting member 73, so that the temporary laminated electrode plate group was subjected to the main positioning. Thereafter, as shown in Fig. 9, the lid body was pressed and restrained by screws in the frame 71 in a lamination direction in a state where the lid body, the pressing restricting member 74, and the positioning jig 72 were superimposed on the frame 71.

In this manner, as shown in Fig. 9 and Fig. 10, the laminated electrode plate group (battery constituent element) subjected to the main positioning was produced in a state of being accommodated in the manufacturing device 70 and pressed in a lamination direction by the pressing restricting member 74 and the restricting member 73. The laminated structure and the recess included in the produced battery element member are as shown in Fig. 3 to Fig. 5.

### <Manufacturing of laminated type all-solid state secondary battery>

The frame 71 that accommodates the produced battery element member was heated to the heating temperature described below, and in a case where the resin material contained in the tape-shaped molded body had melted, the screws were further tightened to deform and flow the tape-shaped molded body, which was thicker than the battery element member after densification, in the in-plane direction of the main surface (first pressurizing step). The end part region of the constituent layer having a non-uniform layer thickness was filled by the deformation and flow of the tape-shaped molded body in the battery inward direction among the tape-shaped molded bodies deformed and flowed in the in-plane direction.

Next, the peripheral walls 71b on the long sides of the frame 71 (two peripheral walls shown in cross section in Fig. 10) were removed. Thereafter, in a state where the frame 71 was heated to the heating temperature described below, a rod-shaped molded body 76 (amount capable of entirely coating the side surface: 5 g) that had been formed in advance into a rod shape was disposed in the vicinity of the end part of the battery element member in a long side direction (the side surfaces of the two sides on which the tab and the substrate extending portion were not provided). The composition of each rod-shaped molded body (mixture) 76 disposed in Examples D-1 to D-6 and Comparative Example D-3 is the same as the composition shown in Table 1 for the corresponding Examples A-1 to A-6 and Comparative Example A-3. After melting the rod-shaped molded body 76 disposed on the long side in this manner, as shown in Fig. 11, the molten material was pushed toward the end part (inside) by the press-fitting plate 74 disposed at the position of the peripheral wall 71b removed from the frame 71, and press-fitted into the end part (edge surface and recess) of the battery element member (second pressurizing step). The rod-shaped molded body 76 deformed and flowed into the opposing negative electrode plate with a solid electrolyte layer without buckling, thereby filling the end part region (edge surface and recess) of the constituent layer having a non-uniform layer thickness without leaving any gaps. This was followed by cooling.

In Examples D-1 to D-6 and Comparative Examples D-1 to D-3, the heating temperatures in the first pressurizing step and the second pressurizing step were each set to the same temperatures as the set temperatures of the hot plate in Examples A-1 to A-6 and Comparative Examples A-1 to A-3.

The thus obtained battery element member (temporary laminated battery) in which the insulating coating body was allowed to flow into the recess was wrapped with a laminated film, and further, in the same manner as in Example A, subjected to warm isostatic pressing for 1 minute under conditions of a temperature of 190°C and a pressure of 588 MPa to form an insulating coating body in the recess of the battery element member and to densify each battery element member.

In a case where each of the laminated type all-solid state secondary batteries of Examples D-1 to D-6 and Comparative Examples D-1 to D-3 was subjected to the above-mentioned [Evaluation 1] to [Evaluation 4] in the same manner as in Example A, the same results as the results (Table 1) of the corresponding laminated type all-solid state secondary batteries of Examples A-1 to A-6 and Comparative Examples A-1 to A-3 were obtained. Therefore, the description of the evaluation results of Example D and Comparative Example D will be omitted.

### <Comparative Example D-4>

A laminated type all-solid state secondary battery of Comparative Example D-4 was manufactured in the same manner as in Example D-1, except that, in Example D-1, a negative electrode plate with an electrolyte layer in which the tape-shaped molded body 1e was not attached in advance to the negative electrode tab 1b and the substrate extending portion 1c was used instead of the negative electrode plate 9 with an electrolyte layer in which the tape-shaped molded body 1e was attached in advance to the negative electrode tab 1b and the substrate extending portion 1c.

In the obtained all-solid state secondary battery, the negative electrode active material layer 2B and the solid electrolyte layer 3B were deformed (thinned) in such a manner that the vicinities of the end parts thereof were bundled toward an edge direction, and a crack occurred in the solid electrolyte layer 3B in the vicinity of the starting point of the deformation. Therefore, in the laminated type all-solid state secondary battery of Comparative Example D-4, the above-mentioned [Evaluation 1] to [Evaluation 4] described in Example A were not carried out.

The results shown in Table 1 and Table 2, and Examples A to D and Comparative Examples A to D reveal the following.

The laminated type all-solid state secondary batteries of Comparative Examples A-1, C-1, and D-1, and the single layer type all-solid state secondary battery of Comparative Example B-1, which did not have an insulating coating body at the end part of the battery element member, were found to have defects (breakage or crack) at the end part of the solid electrolyte layer, and further, short circuits occurred, so that those all-solid state secondary batteries did not function as the all-solid state secondary battery. In addition, in the laminated type all-solid state secondary batteries of Comparative Examples A-2, C-2, and D-2 having the insulating coating body consisting of only EVA without containing insulating inorganic particles, although the end part (recess) of the battery element member was filled with EVA, the occurrence of breakage was found at the end part of the solid electrolyte layer, and the occurrence of the short circuits could not be suppressed. In Comparative Examples A-3, C-3, and D-3 in which PMMA particles were used as the insulating particles, the PMMA particles did not function as aggregates, causing breakage in the solid electrolyte layer and resulting in short circuits.

On the other hand, in all of the laminated type all-solid state secondary batteries of Examples A-1 to A-4, C-1 to C-4, and D-1 to D-4 and the single layer type all-solid state secondary battery of Example B-1, which had an insulating coating body formed of a molten solidified body containing EVA and alumina at the end part of the battery element member, the insulating properties of the end part were secured, no deformation and defects were found at the end part of the solid electrolyte layer, the coating body intrusion region was provided, and the occurrence of short circuits could be highly suppressed. This was the same even in a case where the resin material was changed to PP (Examples A-5, C-5, and D-5) which has a relatively high melting point or to a PE/EVA mixed resin (Examples A-6, C-6, and D-6). Furthermore, an all-solid state secondary battery in which the content of insulating inorganic particles in the mixture was set to be high exhibited a high discharge capacity. This is considered to be because the resin material alone suppresses the intrusion between layers or into the constituent layer (expansion of a battery inactive region), and thus the coating body intrusion region is formed together with the insulating inorganic particles.

In addition, in Examples D-1 to D-6 in which the laminated electrode plates 8 and 9 were positioned collectively using the positioning pin 72a, the electrode plates could be laminated with high overlapping accuracy even though the manufacturing time was short, and furthermore, damage or the like to the active material layer and the solid electrolyte layer could be effectively prevented to produce a battery element member. In addition, following the production of the battery element member, it is possible to manufacture a laminated type all-solid state secondary battery in which an insulating coating body can be formed as desired, the insulating properties of the end part are ensured, the end part of the solid electrolyte layer is free of deformation and defects, and the occurrence of a short circuit can be highly suppressed.

As described above, the all-solid state secondary batteries of Examples A to D have high reliability, regardless of whether the battery is a single layer type or a laminated type, despite the use of a composite material layer as the constituent layer.

Although the present invention has been described with reference to embodiments thereof, it is considered that, unless otherwise specified, even the detailed description of the invention is not limited and should be broadly interpreted without departing from the spirit and scope of the invention shown in the attached "WHAT IS CLAIMED IS".

The present application claims priority based on JP2022-174396 filed on October 31, 2022, the entire contents of which are incorporated herein by reference as a part of the description of the present specification.

### Explanation of References

10: all-solid state secondary battery
30: single layer type all-solid state secondary battery
50: laminated type all-solid state secondary battery
1, 1A, 1B, 1C: negative electrode collector
1a: negative electrode collecting portion
1b: negative electrode tab
1c: substrate extending portion
1d: positioning hole
le: tape-shaped molded body
2, 2A, 2B: negative electrode active material layer
3, 3A, 3B: solid electrolyte layer
4, 4A, 4B: positive electrode active material layer
5, 5A, 5B, 5C: positive electrode collector
5a: positive electrode collecting portion
5b: positive electrode tab
5c: substrate extending portion
5d: positioning hole
5e: tape-shaped molded body
6: operation portion
8: positive electrode plate
9: negative electrode plate (negative electrode plate with electrolyte layer)
21: battery element member (battery unit)
41: battery element member
21A, 41A, 41B, 41C: end part
22, 44, 44B, or 44C: insulating coating body
23, 45: coating body intrusion region
24, 46: insulating inorganic particles
25, 47: resin material
42: battery unit
43, 43B, 43C: recess
70: manufacturing device
71: electrode plate group accommodating frame
71a: bottom portion
71b: peripheral wall (side wall)
71c: accommodation space
71d: hole
72: positioning jig
72a: positioning pin
72b: flat base
73: restricting member
73a: pin receiving portion
74: correction member (pressing restriction member)
75: press-fitting plate
76: rod-shaped molded body
H: communication hole

## Claims

1. An all-solid state secondary battery comprising:
a battery element member,
wherein the battery element member includes one or more battery units each including at least a negative electrode active material layer, a solid electrolyte layer, and a positive electrode active material layer laminated in this order,
an insulating coating body that coats at least a side surface of the battery element member from an outside with respect to the side surface is provided at an end part of the battery element member, and
the insulating coating body consists of a mixture of a resin material that melts in a temperature range of 300°C or lower and insulating inorganic particles that do not melt at 350°C.

2. The all-solid state secondary battery according to claim 1,
wherein the battery unit is a battery unit in which a negative electrode collector, a negative electrode active material layer, a solid electrolyte layer, a positive electrode active material layer, and a positive electrode collector are laminated in this order, and
the positive electrode collector has a positive electrode collecting portion that is laminated adjacent to the positive electrode active material layer and a positive electrode tab that is extended to protrude from one end of the positive electrode collecting portion, and the positive electrode tab protrudes from the insulating coating body.

3. The all-solid state secondary battery according to claim 1,
wherein the battery unit is a battery unit in which a negative electrode collector, a negative electrode active material layer, a solid electrolyte layer, a positive electrode active material layer, and a positive electrode collector are laminated in this order, and
the negative electrode collector has a negative electrode collecting portion that is laminated adjacent to the negative electrode active material layer and a negative electrode tab that is extended to protrude from one end of the negative electrode collecting portion, and the negative electrode tab protrudes from the insulating coating body.

4. The all-solid state secondary battery according to claim 1,
wherein the insulating coating body consists of a molten solidified body of a resin material that melts in a temperature range of 200°C or lower and insulating solid particles that do not melt at 250°C.

5. The all-solid state secondary battery according to claim 1,
wherein at least one interface between layers that are laminated adjacent to each other in the battery element member has a coating body intrusion region into which an insulating coating body containing at least one insulating inorganic particle intrudes from the end part of the battery element member toward an inside.

6. The all-solid state secondary battery according to claim 1,
wherein a recess adjacent to an outer side of the positive electrode active material layer or the negative electrode active material layer in a plane direction, which is formed at the end part of the battery element member due to a dimensional difference between the positive electrode active material layer and the negative electrode active material layer, is filled with an insulating coating body containing the insulating inorganic particles.

7. The all-solid state secondary battery according to claim 6,
wherein at least one interface between layers that are laminated adjacent to each other in the battery element member has a coating body intrusion region into which an insulating coating body containing at least one insulating inorganic particle intrudes from the end part of the battery element member toward an inside.

8. The all-solid state secondary battery according to claim 5 or 7,
wherein the solid electrolyte layer in contact with the coating body intrusion region has no crack.

9. A manufacturing method of an all-solid state secondary battery, the method comprising:
a step of disposing a mixture of a resin material that melts in a temperature range of 300°C or lower and insulating inorganic particles that do not melt at 350°C, at an end part of a battery element member including one or more laminated units each including at least a negative electrode active material layer, a solid electrolyte layer, and a positive electrode active material layer laminated in this order; and
a step of pressurizing the mixture against the battery element member in an inward direction while heating the mixture at a temperature at which the resin material melts.

10. The manufacturing method according to claim 9,
wherein the pressurizing step is carried out in a state where the battery element member is pressurized in a lamination direction.

11. The manufacturing method according to claim 9,
wherein, in the pressurizing step, the mixture disposed at the end part of the battery element member is heated to the temperature to flow in the inward direction while preventing flow in a lamination direction.
